# EUROPEAN PATENT APPLICATION

(11) **EP 4 761 362 A1**
(43) Date of publication of application: **17.06.2026**
(21) Application number: 23952651.0
(22) Date of filing: 21.09.2023
(51) Int. Cl.: H04W 36/08, H04W 84/06

(54) **COMMUNICATION METHOD, AND APPARATUS**

(71) Applicant: HUAWEI TECHNOLOGIES CO., LTD., Shenzhen 518129 (CN)
(72) Inventor: LUO, Hejia, Shenzhen, Guangdong 518129 (CN); WANG, Xiaolu, Shenzhen, Guangdong 518129 (CN); KONG, Chuili, Shenzhen, Guangdong 518129 (CN); WANG, Jun, Shenzhen, Guangdong 518129 (CN); MA, Jianglei, Shenzhen, Guangdong 518129 (CN)
(74) Representative: Maiwald GmbH
(86) International application number: PCT/CN2023/120439
(87) International publication number: WO 2025/059995

(57) **Abstract**

A communication method and apparatus are provided. The method may be applied to non-terrestrial network NTN communication. The method includes: A network device determines first information, and sends the first information. The first information includes information about at least one region served by a first beam or a first cell, a coverage region of the first beam or the first cell includes the at least one region, and the region is fixed relative to the earth. A terminal device receives the first information, and performs at least one of access control, camping control, or measurement control based on location information of the terminal device and the first information. Based on this solution, because the region is fixed relative to the earth, the network device may send information about a region served by a beam or a cell in either an earth-moving mode or an earth-fixed mode, to indicate a service region of the beam or the cell. In other words, in this application, the service region of the beam or the cell in different modes may be described in a unified signaling manner, thereby reducing protocol description complexity.

## Description

### TECHNICAL FIELD

Embodiments of this application relate to the communication field, and in particular, to a communication method and apparatus.

### BACKGROUND

Compared with terrestrial network communication, non-terrestrial network (non-terrestrial network, NTN) communication has characteristics such as a large coverage region and flexible networking. Currently, research institutes, communication organizations, companies, and the like each have participated in researching NTN communication technologies and standards, aiming to build an integrated communication network for space-air-ground communication.

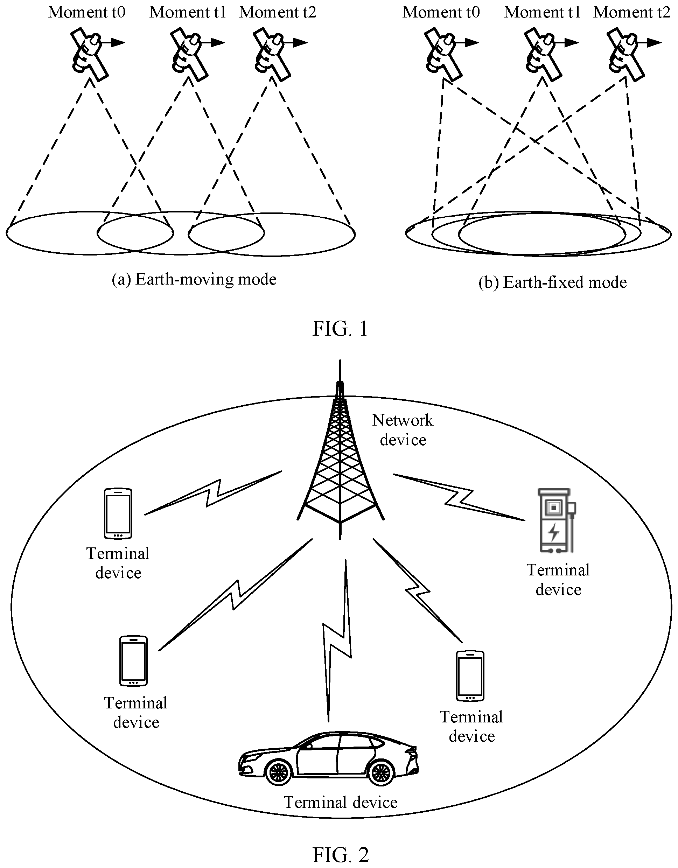

In NTN communication, operating modes of a beam are usually classified into an earth-moving (earth-moving) mode and an earth-fixed (earth-fixed or quasi-earth fixed) mode. As shown in (a) in FIG. 1, in the earth-moving mode, in a period of time, a coverage range of a beam of a satellite moves with the satellite. As shown in (b) in FIG. 1, in the earth-fixed mode, in a period of time, a satellite dynamically adjusts a direction of a beam, so that the beam approximately covers a same region on the ground.

Currently, to cope with a challenge to access and reselection caused by movement of a coverage region relative to the ground due to satellite motion, in the earth-moving mode, a network may send a beam reference point, a beam coverage region contour, and a satellite motion vector to a terminal device; and in the earth-fixed mode, the network may send remaining coverage time of a beam and a coverage region of a beam to the terminal device. After receiving the parameters sent by the network, the terminal device may determine remaining service time of a beam, select a beam with long remaining service time, and start measurement before beam coverage ends.

However, in the foregoing solution, protocol description interfaces for the earth-fixed mode and the earth-moving mode are not unified, that is, parameters sent by the network are different. Therefore, two description mechanisms are required.

### SUMMARY

Embodiments of this application provide a communication method and apparatus, so that a service region of a beam or a cell in different modes can be described in a unified signaling manner, thereby reducing protocol description complexity.

According to a first aspect, a communication method is provided. The method may be performed by a terminal device; may be performed by a component of the terminal device, for example, a processor, a chip, or a chip system of the terminal device; or may be implemented by a logical module or software that can implement all or some functions of the terminal device. The method includes: receiving first information, where the first information includes information about at least one region served by a first beam or a first cell, a coverage region of the first beam or the first cell includes the at least one region, and the region is fixed relative to the earth; and performing at least one of access control, camping control, or measurement control based on location information of the terminal device and the first information.

Based on this solution, because the region is fixed relative to the earth, that is, a location of the region is fixed relative to the earth, a network device may send information about a region served by a beam or a cell in either an earth-moving mode or an earth-fixed mode, to indicate a service region of the beam or the cell. In other words, in this application, the service region of the beam or the cell in different modes may be described in a unified signaling manner, thereby reducing protocol description complexity, and reducing implementation complexity of the network device and the terminal.

In a possible design, the information about the region includes an index of the region. In this possible implementation, the region is fixed relative to the earth, so that the terminal device and the network device may agree on an indexing manner of the region and a correspondence between the region and the index, the network device can indicate the region by using the index of the region, and signaling overheads can be reduced in comparison with explicit description of the service region (for example, the service region is described in a manner of a longitude and latitude region, a beam direction, and an opening angle).

In a possible design, performing access control based on the location information of the terminal device and the first information includes: when a first condition is met, initiating access on the first beam or the first cell; or when a first condition is not met, determining not to initiate access on the first beam or the first cell. Performing camping control based on the location information of the terminal device and the first information includes: when a second condition is met, camping on the first cell; or when a second condition is not met, determining not to camp on the first cell. The first condition or the second condition includes: The terminal device is located in the at least one region served by the first beam or the first cell.

Based on this possible design, the network device sends an index of the at least one region served by the beam or the cell, so that the terminal device can determine, based on the location information of the terminal device, whether the terminal device is located in the region served by the beam or the cell. In this way, when the terminal device is located in the region served by the beam or the cell, the terminal device camps on the cell or initiates access in the cell, to prevent the terminal device from accessing or camping on a cell with unstable coverage caused by beam direction jitter or movement, and improve an access success rate of the terminal device.

In a possible design, the information about the region includes at least one of the following: coverage start time, coverage end time, or remaining coverage time.

In a possible design, performing measurement control based on the location information of the terminal device and the first information includes: determining a first moment based on at least one of coverage start time, coverage end time, or remaining coverage time of the first region; and starting neighboring cell measurement before the first moment. The first moment is a moment at which the first beam or the first cell stops serving the first region, and the first region is a region, in the at least one region served by the first beam or the first cell, in which the terminal device is located.

Based on this possible design, the network device sends at least one of the coverage start time, the coverage end time, or the remaining coverage time of the at least one region served by the beam or the cell, so that terminal devices located in different regions can start measurement before the beam or the cell ends serving the region in which the terminal device is located, that is, terminal devices in different regions served by a same beam or cell may start measurement at different time. In comparison with determining, based on cell-level remaining coverage time, whether to start measurement, this solution can improve flexibility of starting measurement by the terminal device, and prevent the terminal device in a region with long remaining coverage time from starting measurement too early, that is, reduce unnecessary measurement of the terminal device, and reduce power consumption of the terminal device.

In a possible design, the information about the region includes neighboring cell information associated with the region.

In a possible design, performing measurement control based on the location information of the terminal device and the first information includes: performing neighboring cell measurement based on neighboring cell information associated with the first region, where the first region is a region, in the at least one region served by the first beam or the first cell, in which the terminal device is located.

Based on this possible design, the network device sends neighboring cell information associated with the at least one region served by the beam or the cell, so that terminal devices located in different regions can perform measurement based on neighboring cell information associated with the regions in which the terminal devices are located, that is, cells measured by terminal devices located in different regions served by a same beam or cell may be different. This improves measurement flexibility of the terminal device. In comparison with a solution in which each terminal device measures a same neighboring cell, this solution reduces unnecessary neighboring cell measurement, thereby reducing power consumption of the terminal device.

In a possible design, the information about the region includes first indication information and/or second indication information. The first indication information indicates whether measurement configuration is allowed to be changed. The second indication information indicates a first threshold, and the first threshold is a time threshold used to determine whether to change the measurement configuration.

In a possible design, performing measurement control based on the location information of the terminal device and the first information includes: changing the measurement configuration when the remaining coverage time of the first region is greater than the first threshold. Alternatively, the first indication information indicates that the measurement configuration is allowed to be changed in the first region, and the remaining coverage time of the first region is greater than the first threshold. The first region is a region, in the at least one region served by the first beam or the first cell, in which the terminal device is located.

Based on this possible design, the network device may indicate whether the measurement configuration is allowed to be changed and/or indicate the first threshold used to determine whether to change the measurement configuration. When the network device indicates that the measurement configuration is allowed to be changed and/or the remaining coverage time of the region is greater than the first threshold, the terminal device in the region may change the measurement configuration, to improve measurement flexibility. In addition, when changing the measurement configuration is starting relaxed measurement, measurement frequency of the terminal device can be reduced, thereby reducing power consumption of the terminal device. If the terminal device starts relaxed measurement when the remaining coverage time of the region is greater than the first threshold, because the remaining coverage time of the region is long, starting relaxed measurement does not affect the terminal device.

In a possible design, the method further includes: receiving second information, where the second information indicates a second threshold corresponding to at least one coverage level, and a second threshold corresponding to a coverage level is minimum time required to complete transmission at the coverage level.

In a possible design, performing access control based on the location information of the terminal device and the first information includes: when a third condition is met, initiating access on the first beam or the first cell; or when a third condition is not met, determining not to initiate access on the first beam or the first cell. The third condition includes: The remaining coverage time of the first region is greater than a second threshold corresponding to a first coverage level, where the first region is a region, in the at least one region served by the first beam or the first cell, in which the terminal device is located, and the first coverage level is an operating coverage level of the terminal device.

Based on this possible design, the network device indicates minimum time required to complete transmission at the coverage level, so that the terminal device can determine, based on the minimum time required to complete transmission at the operating coverage level of the terminal device and the remaining coverage time of the region in which the terminal device is located, whether to initiate access. When the remaining coverage time of the region in which the terminal device is located is sufficient to complete one transmission, the terminal device initiates access, to improve an access success rate of the terminal device. In addition, if the terminal device initiates access when the remaining coverage time is insufficient, an access may fail. In other words, the terminal device initiates access, but the access fails. However, based on this possible design, when the remaining coverage time is insufficient, the terminal device does not initiate access, that is, the terminal device can be prevented from initiating access when the remaining coverage time is insufficient, so that power consumption of the terminal device can be reduced.

According to a second aspect, a communication method is provided. The method may be performed by a network device, or may be performed by a component of the network device, for example, a processor, a chip, or a chip system of the network device, or may be implemented by a logical module or software that can implement all or some functions of the network device. The method includes: determining first information, and sending the first information. The first information includes information about at least one region served by a first beam or a first cell, a coverage region of the first beam or the first cell includes the at least one region, and the region is fixed relative to the earth. For technical effect brought by the second aspect, refer to the technical effect brought by the first aspect. Details are not described herein again.

In a possible design, the information about the region includes an index of the region.

In a possible design, the information about the region includes at least one of the following: coverage start time, coverage end time, or remaining coverage time.

In a possible design, the information about the region includes neighboring cell information associated with the region.

In a possible design, the information about the region includes first indication information and/or second indication information. The first indication information indicates whether measurement configuration is allowed to be changed. The second indication information indicates a first threshold, and the first threshold is a time threshold used to determine whether to change the measurement configuration.

In a possible design, the method further includes: sending second information, where the second information indicates a second threshold corresponding to at least one coverage level, and a second threshold corresponding to a coverage level is minimum time required to complete transmission at the coverage level.

For technical effect brought by any design of the second aspect, refer to technical effect brought by corresponding designs of the first aspect. Details are not described herein again.

With reference to the first aspect or the second aspect, in a possible design, the first cell is a neighboring cell of a serving cell, or the first beam is a beam in a neighboring cell of a serving cell.

With reference to the first aspect or the second aspect, in a possible design, the first information is carried in a radio resource control RRC reconfiguration message.

With reference to the first aspect or the second aspect, in a possible design, the first information is carried in broadcast information of the first cell.

According to a third aspect, a communication apparatus is provided. The communication apparatus includes a unit or a module. The unit or the module is configured to perform the method according to the first aspect or the second aspect.

According to a fourth aspect, a communication apparatus is provided, to implement various methods. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to a fifth aspect, a communication apparatus is provided, including a processor and a memory. The memory is configured to store computer instructions. When the processor executes the instructions, the communication apparatus is enabled to perform the method according to any one of the foregoing aspects. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

According to a sixth aspect, a communication apparatus is provided, including a processor and a communication interface. The communication interface is configured to communicate with a module other than the communication apparatus. The processor is configured to execute a computer program or instructions, to enable the communication apparatus to perform the method according to any one of the foregoing aspects. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

According to a seventh aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the terminal device in the first aspect, or an apparatus included in the terminal device, for example, a chip or a chip system; or the communication apparatus may be the network device in the second aspect, or an apparatus included in the network device, for example, a chip or a chip system.

According to an eighth aspect, a computer-readable storage medium is provided. The computer-readable storage medium stores a computer program or instructions. When the computer program or the instructions are run on a communication apparatus, the communication apparatus is enabled to perform the method according to any one of the first aspect or the second aspect.

According to a ninth aspect, a computer program product including instructions is provided. When the computer program product runs on a communication apparatus, the communication apparatus is enabled to perform the method according to any one of the first aspect or the second aspect.

According to a tenth aspect, a communication apparatus (for example, the communication apparatus may be a chip or a chip system) is provided. The communication apparatus includes a processor, configured to implement functions in any one of the first aspect or the second aspect.

In some possible designs, the communication apparatus includes a memory, and the memory is configured to store necessary program instructions and data.

In some possible designs, when the apparatus is a chip system, the apparatus may include a chip, or may include a chip and another discrete component.

It may be understood that when the communication apparatus provided in any one of the third aspect to the tenth aspect is a chip, a sending action/function of the communication apparatus may be understood as outputting information, and a receiving action/function of the communication apparatus may be understood as inputting information.

For technical effect brought by any design manner in the third aspect to the tenth aspect, refer to technical effect brought by different design manners in the first aspect or the second aspect. Details are not described herein again.

### BRIEF DESCRIPTION OF DRAWINGS

FIG. 1 is a diagram of beam coverage ranges in an earth-moving mode and an earth-fixed mode in an NTN according to this application;
FIG. 2 is a diagram of an architecture of a communication system according to this application;
FIG. 3 is a diagram of an architecture of a satellite network in a transparent mode according to this application;
FIG. 4 is a diagram of an architecture of a satellite network in a regenerative mode according to this application;
FIG. 5 is a diagram of another architecture of a satellite network in a regenerative mode according to this application;
FIG. 6 is a diagram of still another architecture of a satellite network in a regenerative mode according to this application;
FIG. 7 is a diagram of an architecture of a network in which an NTN and a terrestrial network are converged according to this application;
FIG. 8 is a diagram of another architecture of a network in which an NTN and a terrestrial network are converged according to this application;
FIG. 9 is a schematic flowchart of a communication method according to this application;
FIG. 10 is a diagram of regions served by a beam and service time of all regions in an earth-moving mode according to this application;
FIG. 11 is a diagram of regions served by a beam and service time of all regions in an earth-fixed mode according to this application;
FIG. 12 is a schematic flowchart of another communication method according to this application;
FIG. 13 is a diagram of a relationship between a location and a region of a terminal device according to this application;
FIG. 14 is a schematic flowchart of another communication method according to this application;
FIG. 15 is a diagram of coverage time of a region according to this application;
FIG. 16 is a schematic flowchart of another communication method according to this application;
FIG. 17 is a schematic flowchart of another communication method according to this application;
FIG. 18 is a diagram of a structure of a communication apparatus according to this application;
FIG. 19 is a diagram of a structure of another communication apparatus according to this application; and
FIG. 20 is a diagram of a structure of still another communication apparatus according to this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of various embodiments. In implementations of this application, unless otherwise specified or there is a logic conflict, terms and/or descriptions in different implementations are consistent and may be mutually referenced, and technical features in different implementations may be combined based on an internal logical relationship, to form a new embodiment or implementation. The following implementations of this application are not intended to limit the protection scope of this application.

Currently, 5th generation (5th generation, 5G) new radio (new radio, NR) has entered a commercial deployment phase from a standardization phase. The NR standard is mainly researched and designed based on a characteristic of terrestrial communication, and the terrestrial communication can provide high-rate, high-reliability, low-latency communication, and the like for a user terminal.

Compared with the terrestrial communication, non-terrestrial network (non-terrestrial network, NTN) communication has characteristics such as a large coverage region and flexible networking. In NTN communication, networking is implemented via an aircraft platform and another device, to provide services such as data transmission and voice communication for a terminal.

Based on a height from the aircraft platform to the ground, the NTN may include a low altitude platform (low altitude platform, LAP) subnetwork (LAP subnetwork), a high altitude platform (high altitude platform, HAP) subnetwork (HAP subnetwork), and a satellite communication subnetwork (SATCOM subnetwork).

For example, in the LAP subnetwork, a base station or a base station function is deployed on a low-altitude aircraft platform (for example, an uncrewed aerial vehicle) that is 0.1 km to 1 km away from the ground to provide coverage for a terminal; in the HAP subnetwork, a base station or a base station function is deployed on a high-altitude aircraft platform (for example, an aircraft) that is 8 km to 50 km away from the ground to provide coverage for a terminal; and in the SATCOM subnetwork, a base station or a base station function is deployed on a satellite that is more than 50 km away from the ground to provide coverage for a terminal. Satellite communication has prominent advantages such as global coverage, long-distance transmission, flexible networking, convenient deployment, and being not restricted by geographical locations, and has been widely applied to a plurality of fields such as maritime communication, positioning and navigation, disaster relief, scientific experiments, video broadcasting, and earth observation.

Further, based on orbit altitudes of satellites, satellite communication systems may be classified into a geostationary earth orbit (geostationary earth orbit, GEO) satellite communication system, a medium earth orbit (medium earth orbit, MEO) satellite communication system, and a low earth orbit (low earth orbit, LEO) satellite communication system.

The GEO satellite communication system is also referred to as a synchronous orbit satellite system. An orbit altitude of the GEO satellite is 35786 km, and a moving speed of the GEO satellite is the same as a rotation speed of the earth. In other words, the GEO satellite may remain stationary relative to the ground. The GEO satellite communication system can provide large cell coverage. Generally, a diameter of a cell is 500 km. However, the GEO satellite communication also has obvious disadvantages: (1) An orbit of the GEO satellite is far away from the earth, and a propagation loss in free space is large, resulting in a tight communication link budget. To increase a transmit/receive gain, an antenna with a large diameter needs to be configured for the satellite. (2) A communication transmission delay is large, for example, there is a round-trip delay of about 500 milliseconds, which cannot meet a requirement of a real-time service. (3) GEO orbit resources are limited, transmission costs are high, and coverage cannot be provided for two polar regions of the earth.

An orbit altitude of the MEO satellite is between 2000 km and 35786 km, and global coverage can be implemented by using a small quantity of satellites. However, the orbit altitude of the MEO satellite is higher than an orbit altitude of the LEO satellite, and a transmission delay of the MEO satellite is still greater than that of the LEO satellite communication. Therefore, based on advantages and disadvantages of MEO satellite communication, the MEO satellite is mainly used for positioning and navigation.

The orbit altitude of the LEO satellite is between 300 km and 2000 km, and the orbit altitude of the LEO satellite is less than the orbit altitude of the MEO satellite. The LEO satellite has advantages such as a low transmission delay, a low transmission loss, and low transmission costs.

In satellite communication, operating modes of a beam are usually classified into an earth-moving (earth-moving) mode and an earth-fixed (earth-fixed or quasi-earth fixed) mode. As shown in (a) in FIG. 1, in the earth-moving mode, in a period of time (for example, between a moment t0 and a moment t2), a coverage range of a beam of a satellite moves with the satellite. As shown in (b) in FIG. 1, in the earth-fixed mode, in a period of time, for example, between a moment t0 and a moment t2, a satellite dynamically adjusts a direction of a beam, so that the beam approximately covers a same region on the ground. However, in actual application, due to a problem of precision of a beam direction and a problem of distortion of beam projections at different incident angles on the ground, in the earth-fixed mode, a coverage region of the beam still jitters to some extent as time changes.

Generally, movement of a coverage region relative to the ground due to satellite movement brings a challenge to access and reselection of a terminal. For example, in the earth-moving mode, a terminal that is located at an edge of a beam coverage region and that is away from a satellite movement direction may fail to access in an access process because the beam no longer covers a location of the terminal. For another example, in the earth-fixed mode, a coverage region of a beam is distorted as the satellite moves, and jitter of the coverage region is caused due to a quantization error of a beam weight in engineering. Therefore, the terminal at the edge of the beam coverage region may also encounter a case in which an original beam no longer covers the terminal.

To cope with the foregoing challenge, in the earth-moving mode, the network may send parameters such as a beam reference point, a beam coverage region contour, and a satellite motion vector to the terminal, so that the terminal can obtain remaining coverage time of beams based on these parameters, to select a beam with long remaining coverage time; and start measurement before beam coverage ends. In the earth-fixed mode, the network may send remaining coverage time of a beam and a coverage region of the beam to the terminal, so that the terminal selects a beam with long remaining coverage time, and starts measurement before beam coverage ends.

However, in the foregoing solution, signaling overheads in the earth-moving mode are high. In addition, protocol description interfaces in the earth-moving mode and the earth-fixed mode are not unified, that is, parameters that need to be sent by the network are different. Therefore, two description mechanisms are required.

In view of this, this application provides a communication method. In the method, the ground may be discrete into some regions, and the network may send information about the regions to the terminal, to indicate information such as a coverage range of a beam or a cell by using the regions. In other words, in both the earth-moving mode and the earth-fixed mode, the network may notify the terminal of information such as the coverage region and remaining time of the beam or the cell by sending the information about the regions, to uniformly describe an interface, reduce protocol description complexity, and reduce implementation complexity of the network device and the terminal.

The following describes the technical solutions in embodiments of this application with reference to accompanying drawings in embodiments of this application.

The technical solutions in embodiments of this application may be applied to various communication systems. The communication system may be a third generation partnership project (third generation partnership project, 3GPP) communication system, for example, a 5G system like a long term evolution (long term evolution, LTE) system or an NR system, a vehicle to everything (vehicle to everything, V2X) system, a system in LTE and 5G hybrid networking, a device-to-device (device-to-device, D2D) communication system, a machine-to-machine (machine-to-machine, M2M) communication system, an Internet of Things (Internet of Things, IoT), and another next-generation communication system. Alternatively, the communication system may be a non-3GPP communication system. This is not limited.

The communication system applicable to this application is merely an example for description, and a communication system and a communication scenario applicable to this application are not limited thereto. The communication system and the communication scenario provided in this application do not constitute any limitation on the solutions of this application. A unified description is provided herein. Details are not described below again.

As shown in FIG. 2, the communication system applicable to the solutions of this application may include at least one terminal device and at least one network device. A quantity of network devices and a quantity of terminal devices in FIG. 2 are merely examples, and the communication system may include more or fewer network devices or terminal devices than those shown in FIG. 2.

Optionally, the terminal devices may communicate with each other in a wired or wireless manner, the terminal device may communicate with the network device in a wired or wireless manner, and the network devices may communicate with each other in a wired or wireless manner.

Optionally, the terminal device may be a user side device having a wireless transceiver function, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle (unmanned aerial vehicle, UAV) to uncrewed aerial vehicle (UAV to UAV, U2U) communication capability, or the like. The terminal device may be mobile, or may be fixed. This is not specifically limited in this application.

Optionally, the network device may be a network side device having a wireless transceiver function, or may be a chip, a chip system, or a module disposed in the device. The network device is located in a radio access network (radio access network, RAN) of a mobile communication system, and is configured to provide an access service for the terminal device.

In a possible implementation, the network device may be a wireless relay node or a wireless backhaul node. For example, the network device may serve as a layer 1 relay device, and is configured to regenerate a physical layer signal (that is, radio frequency filtering, frequency conversion, and amplification processing), without having another higher protocol layer.

In another possible implementation, the network device may implement a part of or all functions of a base station. For example, the network device may be an evolved NodeB (evolved NodeB, eNB or eNodeB) in LTE or an LTE-advanced (LTE-Advanced, LTE-A) system, for example, a conventional macro base station eNB or a micro base station eNB in a heterogeneous network scenario; may be a next generation node B (next generation node B, gNodeB or gNB) in a 5G system; may be a transmission reception point (transmission reception point, TRP); may be a base station in a future evolved PLMN; or may be a device that implements a base station function in IoT, V2X, D2D, or M2M.

Alternatively, the network device may be a central unit (central unit, CU), a distributed unit (distributed unit, DU), a CU and a DU, a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

For example, the base station in embodiments of this application may include base stations in various forms, for example, a macro base station, a micro base station (which is also referred to as a small cell), a relay station, and an access point. This is not specifically limited in embodiments of this application.

Optionally, the network device in embodiments of this application may be disposed on a non-terrestrial platform, for example, a low-altitude platform (for example, an uncrewed aerial vehicle), a high-altitude platform (for example, an airplane), or a satellite. Therefore, the network device in embodiments of this application may also be referred to as a non-terrestrial network device.

For example, the network device is deployed on a satellite, or the network device is a satellite. The communication system may further include an NTN gateway (NTN gateway) (or referred to as a gateway station). Generally, the NTN gateway is deployed on the ground. The NTN gateway may communicate with the satellite, and a link between the satellite and the NTN gateway may be referred to as a feeder link (feeder link).

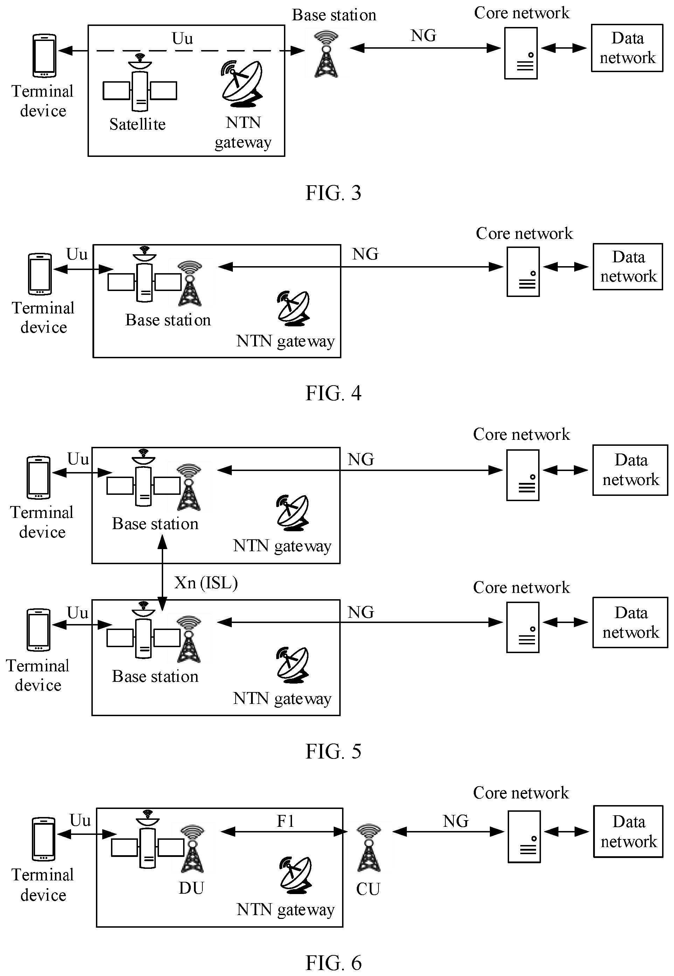

As shown in FIG. 3, when a satellite serves as a wireless relay node, or a satellite has a relay forwarding function, the NTN gateway has functions of a base station or a part of functions of a base station. In this case, the NTN gateway may serve as a base station. Alternatively, the NTN gateway and the base station may be separately deployed. In other words, in addition to the NTN gateway, the communication system further includes the base station. In FIG. 3, an example in which the NTN gateway and the base station are separately deployed is used for description.

As shown in FIG. 4, when the satellite can implement some or all functions of the base station, the satellite has a data processing capability, and the satellite may serve as the base station. In this case, the NTN gateway and the satellite may transmit user plane data of the terminal device through a satellite radio interface (satellite radio interface, SRI).

In addition, when the satellite can implement a part of or all functions of the base station, as shown in FIG. 5, an inter-satellite link (inter-satellite link, ISL) exists between different satellites, and the satellites may communicate with each other through the ISL. Alternatively, as shown in FIG. 6, the satellite may have a DU processing function of the base station, or the satellite can serve as a DU. In this scenario, a CU processing function of the base station may be deployed on the ground, and the CU and the DU communicate with each other through an F1 interface by using the NTN gateway.

In the architectures shown in FIG. 3 to FIG. 6, NG is an interface between a base station and a core network. Uu is an interface between a base station and a terminal device. Xn refers to an interface between base stations. It may be understood that, with evolution of a communication system, a name of an interface between a base station and a core network, a name of an interface between a base station and a terminal device, and a name of an interface between base stations may also change. This is not specifically limited in this application.

Optionally, when the satellite serves as a wireless relay node and has a relay forwarding function, it may be considered that the satellite operates in a transparent (transparent) mode. When the satellite has a data processing capability and can implement a part of or all functions of the base station, it may be considered that the satellite operates in a regenerative (regenerative) mode. A satellite may support only the transparent mode or only the regenerative mode, or may support the transparent mode and the regenerative mode, and can switch between the transparent mode and the regenerative mode.

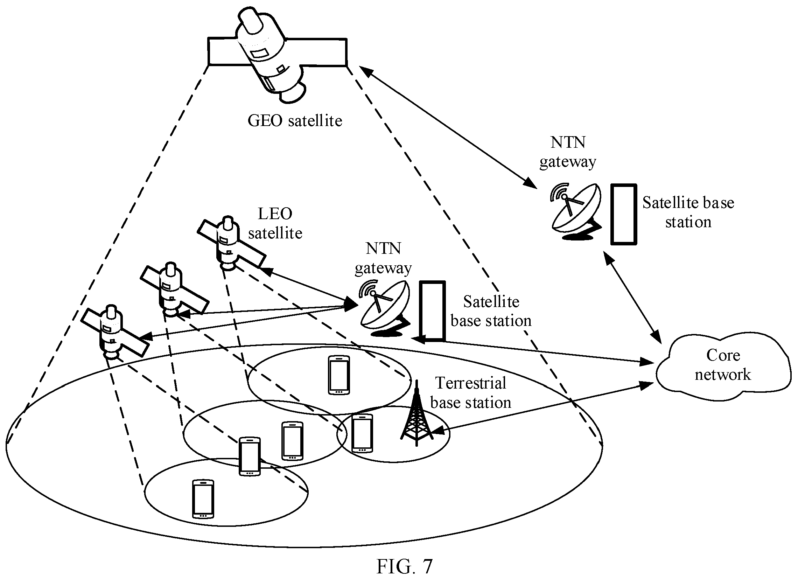

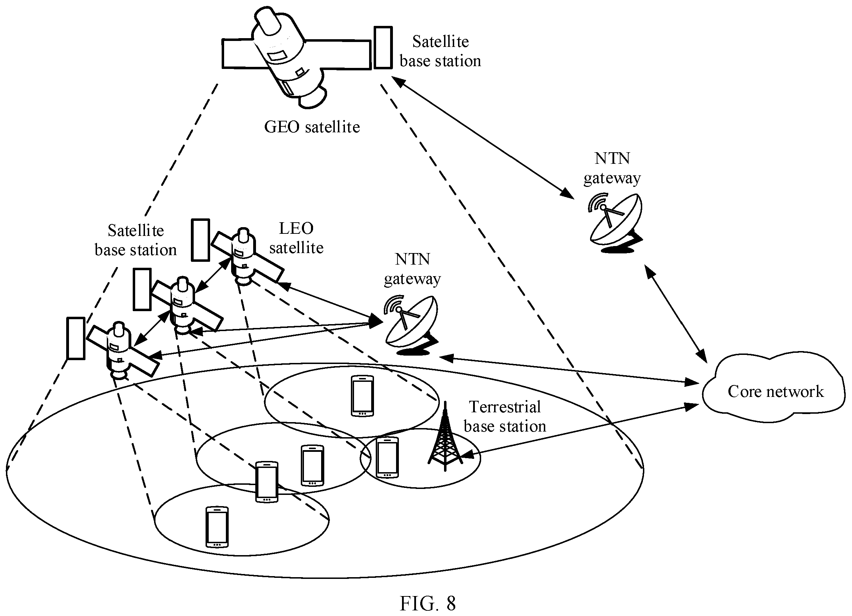

In some implementation scenarios, the NTN and the terrestrial network may be converged. For example, FIG. 7 and FIG. 8 each show an architecture of a converged network of an NTN and a terrestrial network according to an embodiment of this application. In the architecture shown in FIG. 7, the satellite operates in the transparent mode. Therefore, an NTN base station needs to be additionally deployed. In the architecture shown in FIG. 8, the satellite operates in the regenerative mode, and the satellite may serve as an NTN base station, or the NTN base station may be deployed on the satellite. The NTN base station is a base station in the NTN.

In addition, in the architectures shown in FIG. 7 and FIG. 8, the terrestrial base station is a base station in a terrestrial network. The NTN base station and the terrestrial base station may be interconnected through a common core network, or may implement more timely assistance and interconnection through an interface defined between base stations. For example, the interface between the base stations may be an Xn interface, and the interface between the base station and the core network may be an NG interface. Certainly, the interface between the base stations and the interface between the base station and the core network may alternatively be implemented in another manner. This is not specifically limited in this application.

It may be understood that the satellites in the architectures in FIG. 3 to FIG. 8 may be replaced with non-ground loads on other flying platforms such as uncrewed aerial vehicles and aircrafts.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

With reference to the communication systems shown in FIG. 2 to FIG. 8, the following describes the communication method provided in embodiments of this application through interaction between a terminal device and a network device as an example.

It should be noted that, in the following embodiments of this application, names of messages between devices, names of parameters, names of pieces of information, or the like are merely examples, and may have other names in other embodiments. This is not specifically limited in the method provided in this application.

It may be understood that an execution body may perform some or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

In an example, the following embodiment is described by using an example in which the aircraft platform mentioned above is a satellite, that is, satellite communication in the NTN. Certainly, the method may also be applicable to another scenario in the NTN, for example, an LAP subnetwork or an HAP subnetwork. This is not specifically limited.

In addition, this application may also be applied to another possible communication scenario or communication system, for example, a long-distance communication scenario in which a distance between a terminal device and a base station is long or a relative moving speed is high. Processing such as access and measurement may be performed according to the communication method provided in embodiments of this application.

To facilitate understanding of the technical solutions in embodiments of this application, the following briefly describes related terms in this application first.

Region: Unless otherwise specified, a "region" in the following embodiments of this application refers to a geographical region. The region is fixed relative to the earth, or it is understood that the region is a geographical region fixed relative to the earth. For example, the region may have at least one of the following attributes: a shape, a contour, a size, a radius, an area, a geographical location, and the like.

The "region" may further have a height attribute, that is, the region may be understood as a geographical region with a given height or height range. By default, the region may be a geographical region with an altitude of 0 kilometer (km) or about 0 km (for example, within a range of [-2, 2] km) on the ground, or a geographical region with an average altitude. In addition, the region may also be another geographic region with a specific height or a specific height range, for example, a geographic region with an altitude of 10 km, or a geographic region with an altitude of about 10 km (for example, within a range of [7, 13] km).

In a possible implementation, the region fixed relative to the earth may also be referred to as a "beam position", a "geographic region", or the like. Certainly, the region may have another name. A name of the region fixed relative to the earth is not specifically limited in this application.

Shapes, contours, sizes, radii, and areas of different regions may be the same or may be different. Different regions have different geographical locations. Different regions may overlap or may not overlap.

In a possible implementation, that the region is fixed relative to the earth may be understood as that a contour, a size, or a geographical location of the region remains unchanged. For example, the contour, the size, or the geographical location of the region does not change with time. Alternatively, that the region is fixed relative to the earth may be understood as that the region contour and points in the region may be described by using a fixed earth coordinate system, or coordinates of each point in the region contour in the fixed earth coordinate system are fixed.

In a possible implementation, a shape of the region may be a regular hexagon, or another shape like a regular pentagon, a circle, or an ellipse. Alternatively, the shape of the region may be an irregular shape. This is not limited.

For example, the shape of the region may be defined in a protocol, or may be defined by the network device. Shapes of regions defined by different network devices may be the same or may be different. Shapes of a plurality of regions may be defined for a same network device. Similarly, the size, the radius, and the area of the region may also be defined in a protocol, or may be defined by the network device. Sizes, radii, and areas of regions defined by different network devices may be the same or may be different. A same network device may also define sizes of a plurality of regions, radii of a plurality of regions, or areas of a plurality of regions.

In a possible implementation, the earth surface may be divided into a plurality of regions, and the plurality of regions are indexed (for example, numbered). The terminal device and the network device may agree on a numbering manner (for example, numbering from 1 or from 0) of these regions and a correspondence between a region and an index. Alternatively, a protocol may define a numbering manner of these regions and a correspondence between a region and an index. Information such as a geographical location of a region may be determined based on the index of the region.

Optionally, the plurality of regions obtained through division may completely cover the earth surface. For example, any location on the earth surface belongs to a region. Alternatively, the plurality of regions obtained through division may cover some geographical locations on the earth. For example, the plurality of regions may not cover the south pole and/or the north pole of the earth, that is, the south pole and/or the north pole may not have a region.

Optionally, a manner of dividing the plurality of regions may be defined in a protocol, or may be defined by the network device. Division manners defined by different network devices may be the same or different. A plurality of division manners may also be defined for a same network device.

In a first possible division manner, the earth surface may be divided by using a longitude and latitude grid as a granularity. For example, the earth surface may be divided by using a longitude and latitude grid with a granularity of 1 degree. If only the discrete manner is used, the world may be divided into 360 × 360 = 129600 regions, and the terminal device and the network device may agree on indexes of the 129600 regions as 0, 1, ...,129599, or 1, 2, ... ,129600.

Optionally, after the height attribute of the geographical region is introduced, a plurality of grids may be defined to divide the earth surface. For example, the earth surface of a grid at an altitude of 0 km or within an altitude range of [-2, 2] km may be divided by using a longitude and latitude grid with a granularity of 1 degree, to generate 129600 regions. At an altitude of 10 km or within an altitude range of [7, 13] km, the longitude and latitude grid with the granularity of 1 degree is used for division to generate 129600 regions again. When these regions are indexed, an index range needs to be extended. For example, total indexes are 0, 1, ... , 129599, 129600, 129601, ..., 259199, where the first 129600 sequence numbers indicate indexes of regions whose altitudes are 0 km or whose altitudes are within the range of [-2, 2] km, and the last 129600 sequence numbers indicate region indexes whose altitudes are 10 km or whose altitudes are within the range of [7, 13] km.

For example, the granularity of longitude and latitude grid may be determined based on a type of the network device. For example, when the network device is an LEO satellite, a small granularity may be used for discretization; and when the network device is a GEO satellite, a large granularity may be used for discretization.

In a second possible division manner, the earth surface may be divided by using longitude and latitude grids with a plurality of granularities. For example, a part of the earth surface or a part of administrative regions is divided by using the longitude and latitude grid with the granularity of 1 degree, and other part of the earth surface or other part of administrative regions is divided by using a longitude and latitude grid with a granularity of 2 degrees.

Alternatively, after the height attribute of the geographical region is introduced, the earth surface may be divided by using the longitude and latitude grid with the granularity of 1 degree at an altitude of 0 km, and the earth surface may be divided by using the longitude and latitude grid with the granularity of 2 degrees at an altitude of 10 km.

In a third possible division manner, the earth surface may be divided based on administrative regions. For example, a rural administrative region is considered as a region.

In a fourth possible division manner, for the GEO satellite, a projection of a beam of the GEO satellite on the ground may be considered as a region. Because the GEO satellite is stationary relative to the earth, it may be considered that the projection of the beam of the GEO satellite on the ground is fixed relative to the earth.

In actual application, the earth surface may be divided in a plurality of division manners. For example, a part of the earth surface or a part of administrative regions is divided by using the longitude and latitude grid with the granularity of 1 degree, and other part of the earth surface or other part of administrative regions is divided based on the administrative regions.

In a possible implementation, when the earth surface is divided into a plurality of regions, different levels of region division may be performed on a same surface range. For example, for a surface range, first-level region division may be performed by using a longitude and latitude grid with a granularity of 10 degrees, second-level region division may be performed by using a longitude and latitude grid with a granularity of 6 degrees, and third-level region division may be performed by using a longitude and latitude grid with a granularity of 1 degree. In this case, in the surface range, a quantity of regions at a first level is greater than a quantity of regions at a second level, and the quantity of regions at the second level is greater than a quantity of regions at a third level. In addition, in this scenario, regions at each level may be separately numbered.

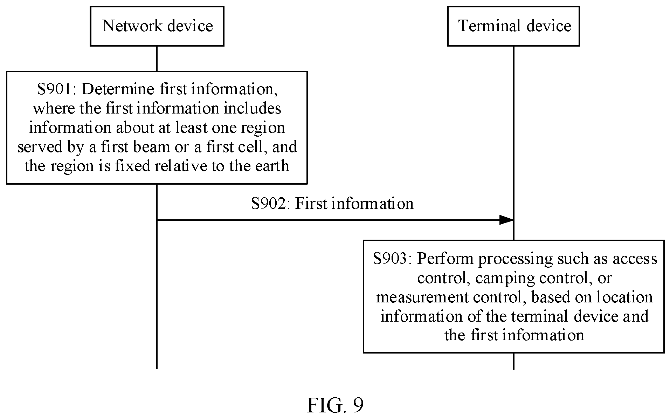

The following describes the communication method provided in embodiments of this application. FIG. 9 is a flowchart of a communication method according to an embodiment of this application. The method may be applied to interaction between a terminal device and a network device in the communication systems shown in FIG. 2 to FIG. 8. As shown in FIG. 9, the communication method may include the following steps.

S901: A network device determines first information.

The first information includes information about at least one region served by a first beam or a first cell. A coverage region of the first beam or the first cell includes the at least one region. The region is fixed relative to the earth.

In a possible implementation, the first beam may be a beam in the first cell. The first cell may include one or more beams, and the first beam may be any beam in the first cell.

In a possible implementation, the first beam may be a beam controlled or generated by the network device. The first cell may be a cell controlled or managed by the network device. In this scenario, the first cell may be a current cell or referred to as a local cell, or the first cell may be a neighboring cell of the current cell. For example, the current cell may be understood as a cell in which a terminal device is located, or the terminal device is located in a coverage region of the current cell.

In another possible implementation, the first beam may be a beam controlled or generated by another network device. The first cell may be a cell controlled or managed by another network device. In this scenario, the first cell may be understood as a neighboring cell of a cell controlled or managed by the current network device, that is, the first cell is a neighboring cell of the current cell. When the first cell is the neighboring cell of the current cell, the current cell may be a serving cell of the terminal device, that is, the first cell may be a neighboring cell of the serving cell, and the first beam is a beam in the neighboring cell of the serving cell.

For example, a beam may be represented in a protocol as a spatial domain filter (spatial domain filter), or referred to as a spatial filter (spatial filter), or referred to as a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. The beam may be indicated by using a transmission configuration indication (transmission configuration indication, TCI) state (TCI-state) parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI state, the spatial relation, or the like. The foregoing terms are also equivalent to each other. In this application, the beam may alternatively be replaced with another term for representing a beam. This is not limited in this application.

In a possible implementation, the at least one region served by the first beam or the first cell may be understood as a region intended to be served by the first beam or the first cell, a region to be served by the first beam or the first cell, or a region being served by the first beam or the first cell.

In a possible implementation, the network device is moving, and a coverage region of the first beam or the first cell changes with movement of the network device. The region is fixed relative to the earth. Therefore, regions served by the first beam or the first cell may be different at different moments, or time (for example, start time and duration) at which different regions are served by the beam or the cell may be different.

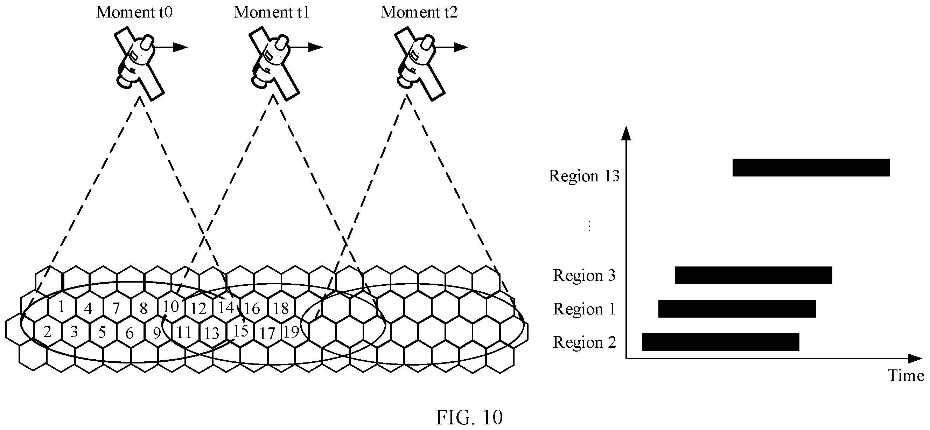

For example, in an earth-moving mode, as shown in FIG. 10, an example in which the network device is a satellite and an opening angle in a dashed line range is a coverage region of a beam is used. A region served by the beam at a moment t0 includes regions numbered 1 to 13 (referred to as a region 1 to a region 13). As time goes by, in the region 1 to the region 13, the region 2 is a region whose service is first started and first ended, and the region 13 is a region whose service is last started and last ended.

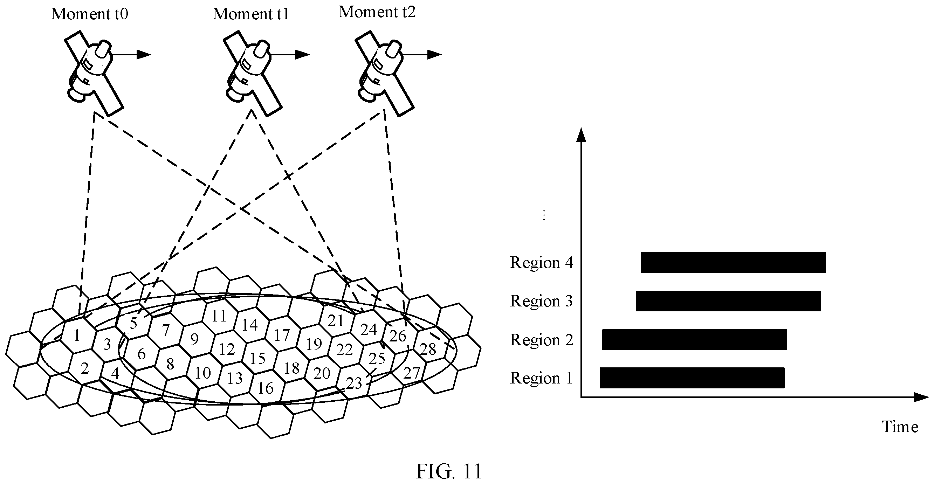

In the earth-fixed mode, as shown in FIG. 11, for example, the network device is a satellite, and an opening angle in a dashed line range is a coverage region of a beam. From a moment t0 to a moment t2, the coverage region of the beam includes regions numbered 1 to 28 (referred to as a region 1 to a region 28). As time goes by, most of the region 1 to the region 28 are served at the same time. However, due to impact of coverage region distortion and beam direction jitter, a region located at an edge of a beam coverage region may be served at different time. For example, service time of the region 1 to the region 5 and service time of the region 23 to the region 28 may be different from that of other regions.

In a possible implementation, a union set of the at least one region served by the first beam may be understood as a service region of the first beam. The service region of the first beam may be less than or equal to the coverage region (or referred to as a coverage range) of the first beam. For example, in an example in FIG. 10, an opening angle in a dashed line range is a coverage region of a beam. The coverage region may include regions whose indexes are 1 to 13, a union set formed by the regions whose indexes are 1 to 13 may be understood as a service region of the beam, and the service region is smaller than the coverage region of the beam. In addition, because regions served by the first beam may be different at different moments, the service region of the first beam may also change with movement of the network device.

In a possible implementation, the region served by the first cell may include a region served by a part of or all beams in the first cell.

In a possible implementation, when the network device serves as a wireless relay node (the architecture shown in FIG. 3), that the network device determines the first information may include: The network device receives the first information. For example, the network device receives the first information from a base station or an NTN gateway. When the network device is configured to implement a part of or all functions of the base station (the architectures shown in FIG. 4 to FIG. 6), that the network device determines the first information may include: The network device generates the first information.

S902: The network device sends the first information. Correspondingly, the terminal device receives the first information from the network device.

In a possible implementation, the first information may be carried in broadcast information of a current cell, or the first information may be carried in an RRC message (for example, an RRC reconfiguration message).

For example, the broadcast information may be system information, for example, a master information block (master information block, MIB) or a system information block (system information block, SIB). The RRC message is an RRC message corresponding to an RRC connection of the terminal device in the current cell.

When the first cell is the current cell, the first information is carried in the broadcast information of the first cell, or carried in the RRC message corresponding to the RRC connection of the terminal device in the first cell.

For example, if the first cell is the current cell, the first information may be carried in the broadcast information of the current cell (namely, the first cell). If the first cell is a neighboring cell of the current cell, the first information may be carried in the RRC message.

S903: The terminal device performs processing based on location information of the terminal device and the first information.

In a possible implementation, the location information of the terminal device may be global navigation satellite system (global navigation satellite system, GNSS) information.

In a possible implementation, the processing performed by the terminal device may be at least one of access control, camping control, or measurement control. Certainly, the processing performed by the terminal device may alternatively be any other processing that needs to use the location information and the first information. This is not specifically limited in this application.

Based on the foregoing solution, because the region is fixed relative to the earth, that is, the location of the region is fixed relative to the earth, the network device may send the information about the region served by the beam or the cell in either the earth-moving mode or the earth-fixed mode, to indicate the service region of the beam or the cell. In other words, in embodiments of this application, a service region of a beam or a cell in different modes may be described in a unified signaling manner, thereby reducing protocol description complexity, and reducing implementation complexity of the network device and the terminal. In addition, the region is fixed relative to the earth, so that the terminal device and the network device may agree on an indexing manner of the region and a correspondence between the region and the index, the network device can indicate the region by using the index of the region, and signaling overheads can be reduced in comparison with explicit description of the service region (for example, the service region is described in a manner of a longitude and latitude region, a beam direction, and an opening angle).

The foregoing describes an overall procedure of the solutions of this application, and the following describes information about a region in detail.

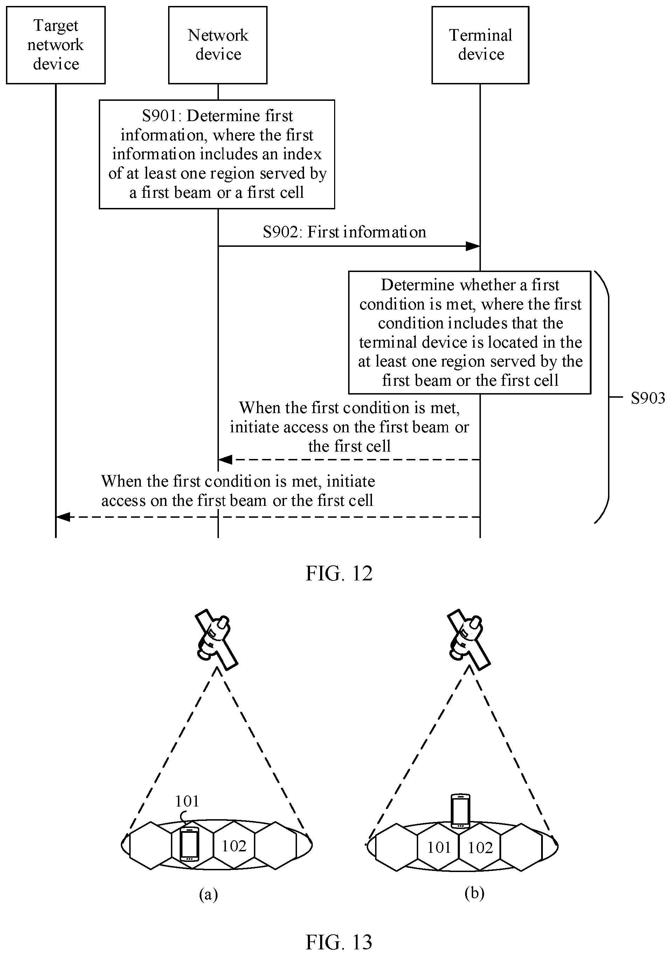

In a first possible implementation, as shown in FIG. 12, the information about the region includes the index of the region. In other words, the first information includes an index of the at least one region served by the first beam or the first cell.

In a possible implementation, the first information may include an index of the first beam and an index of the at least one region served by the first beam. Alternatively, the first information may include an index of each beam in the first cell and an index of at least one region served by each beam.

For example, the beam is a synchronization signal block (synchronization signal block, SSB) beam. The first information may indicate a relationship shown in Table 1. For example, the SSB includes a primary synchronization signal (primary synchronization signal, PSS), a secondary synchronization signal (secondary synchronization signal, SSS), and a physical broadcast channel (physical broadcast channel, PBCH).

**Table 1**

| SSB index | Region index |
|---|---|
| 0 | 101 |
| 0 | 102 |
| 1 | 103 |
| 1 | 104 |
| ... | ... |

It can be learned from Table 1 that at least one region served by an SSB 0 is a region 101 and a region 102. At least one region served by an SSB 1 is a region 103 and a region 104.

In another possible implementation, the first information may include N region index sets. An n^{th} region index set includes an index of at least one region served by an n^{th} beam of the first cell. N is a quantity of beams in the first cell, and *n* = 0, 1, ... , *N* - 1. In this case, the first information may not include the index of the first beam or the index of each beam in the first cell.

For example, the beam is an SSB. The first information may include the following information: {101, 102}, {103, 104}, ..., and the like. It indicates that the at least one region served by the SSB 0 is the region 101 and the region 102. The at least one region served by the SSB 1 is the region 103 and the region 104. The rest can be deduced by analogy.

When the first information includes the index of the at least one region served by the first beam or the first cell, as shown in FIG. 12, that the terminal device performs access control based on the location information of the terminal device and the first information may include:

When a first condition is met, the terminal device initiates access on the first beam or the first cell; or when the first condition is not met, the terminal device determines not to initiate access on the first beam or the first cell. In other words, the terminal device may determine whether the first condition is met, and initiate access on the first beam or the first cell when the first condition is met. The first condition includes: The terminal device is located in the at least one region served by the first beam or the first cell.

For example, the terminal device may determine, based on the location information of the terminal device, the region in which the terminal device is located. The terminal device may further learn, based on the first information, of the at least one region served by the first beam or the first cell, to determine whether the terminal device is located in the at least one region served by the first beam or the first cell.

When the first cell is the current cell, the first beam may be understood as a beam detected by the terminal device, or may be understood as a beam with strongest signal quality detected by the terminal device. For example, the beam is an SSB beam. The first cell may include a plurality of SSB beams. It is assumed that the terminal device detects an SSB 0 and an SSB 1, and signal strength of the SSB 0 is higher than signal strength of the SSB 1. In this case, the first beam is the SSB 0. Alternatively, it is assumed that the terminal device detects only the SSB 0, and the first beam is also the SSB 0.

When the first cell is the current cell, the first condition may further include a condition in an access criterion defined in an existing protocol. When the first cell is a neighboring cell of the current cell, the first condition may further include a condition in a reselection/handover criterion defined in an existing protocol. In this embodiment of this application, an example in which all conditions in an access/reselection/handover criterion defined in the existing protocol are met is used for description.

For example, the first beam is the SSB 0, and the at least one region served by the SSB 0 is the region 101 and the region 102. As shown in (a) in FIG. 13, if the terminal device determines, based on the location information of the terminal device, that the terminal device is located in the at least one region served by the SSB 0, the terminal device initiates access on the first beam. As shown in (b) in FIG. 13, if the terminal device determines, based on the location information of the terminal device, that the terminal device is not located in the at least one region served by the SSB 0, even if the terminal device is located in a coverage region of the SSB 0, the terminal device does not initiate access on the first beam.

In a possible implementation, that the terminal device initiates access on the first beam may be understood as that the terminal device initiates random access on a random access channel (random access channel, RACH) occasion (RACH occasion, RO) corresponding to the first beam. For example, the beam is an SSB beam. The network device may configure a correspondence between an SSB and an RO, so that the terminal device can learn of an RO corresponding to the first beam.

In a possible implementation, when the first cell is the current cell, as shown in FIG. 12, that the terminal device initiates access on the first beam or the first cell may include: The terminal device sends a random access preamble to the network device. When the first cell is a neighboring cell of the current cell, and the first cell is not a cell managed by the current network device, as shown in FIG. 12, that the terminal device initiates access on the first beam or the first cell may include: The terminal device sends the random access preamble to the target network device, where the target network device is a network device that manages the first cell.

When the first information includes the index of the at least one region served by the first beam or the first cell, that the terminal device performs camping control based on the location information of the terminal device and the first information may include:

When the second condition is met, the terminal device camps on the first cell; or when the second condition is not met, the terminal device determines not to camp on the first cell. In other words, the terminal device may determine whether the second condition is met, and camp on the first cell when the second condition is met. The second condition includes: The terminal device is located in the at least one region served by the first beam or the first cell. In addition, the first condition may further include a condition in a camping criterion defined in an existing protocol. For implementation of performing camping control by the terminal device, refer to related descriptions of performing access control by the terminal device based on the location information of the terminal device and the first information. Details are not described herein again.

In a possible implementation, when receiving the first information, where the first information includes the index of the at least one region served by the first beam or the first cell, the terminal device performs access control or camping control in the foregoing manner. If the terminal device does not receive the first information, the terminal device may perform access and camping according to a definition in the existing protocol.

Based on the foregoing first possible implementation, the network device sends the index of the at least one region served by the beam or the cell, so that the terminal device can determine, based on the location information of the terminal device, whether the terminal device is located in the region served by the beam or the cell. In this way, when the terminal device is located in the region served by the beam or the cell, the terminal device camps on the cell or initiates access in the cell, to prevent the terminal device from accessing or camping on a cell with unstable coverage caused by beam direction jitter or movement, and improve an access success rate of the terminal device.

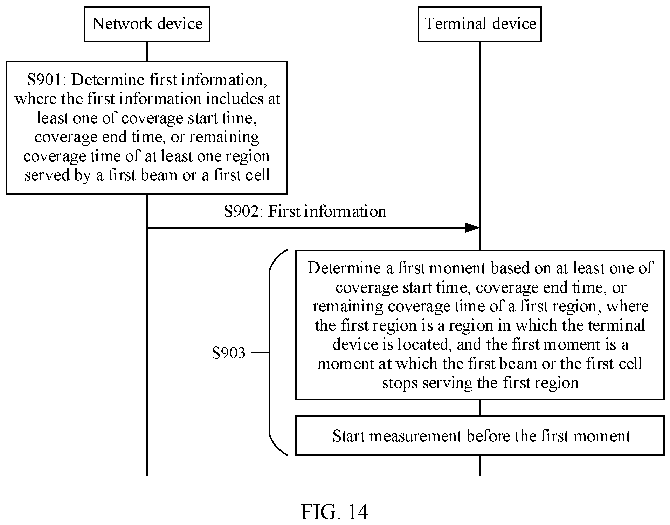

In a second possible implementation, as shown in FIG. 14, the information about the region includes at least one of coverage start time of the region, coverage end time of the region, or remaining coverage time of the region. In other words, the first information includes at least one of coverage start time, coverage end time, or remaining coverage time of the at least one region served by the first beam or the first cell.

In a possible implementation, the coverage start time of the region is time at which the beam or the cell starts to cover or serve the region. The coverage end time of the region is time at which the beam or the cell stops covering the region. The remaining coverage time of the region is remaining time for the beam or the cell to cover or serve the region.

In a possible implementation, the coverage start time may also be referred to as service start time, service starting time, or service startup time. The coverage end time may also be referred to as coverage stop time, service end time, or service stop time. The remaining coverage time may also be referred to as remaining service time. Certainly, the coverage start time, the coverage end time, and the remaining coverage time may have other names. This is not specifically limited in this application.

In a possible implementation, the coverage start time and the coverage end time of the region may be used to indicate or determine the remaining coverage time of the region. For example, the remaining coverage time of the region may be a time difference between a current moment and the coverage end time. Alternatively, when total coverage duration of a beam or a cell for a region is known, remaining coverage time of the region may be obtained by subtracting a time difference between coverage start time and a current moment from the total coverage duration. Alternatively, for two consecutive or adjacent regions, coverage start time of a latter region may be used as coverage end time of a former region, so that remaining coverage time of the former region may be determined based on the coverage start time of the latter region. The latter region is a region that served by the beam or the cell later, and the former region is a region that served by the beam or the cell earlier. For example, for a region 2 and a region 3 in FIG. 10, the region 2 may be understood as the former region, and the region 3 may be understood as the latter region.

In a possible implementation, the coverage start time of the region carried in the first information may be later than time at which the beam or the cell actually starts to cover the region. The coverage end time of the region carried in the first information may be earlier than time at which the beam or the cell actually stops covering the region. Alternatively, the coverage start time of the region carried in the first information may be understood as start time at which the beam or the cell fully covers the region, and the coverage end time of the region carried in the first information may be understood as end time at which the beam or the cell fully covers the region. Alternatively, remaining coverage time of a region is less than or equal to full coverage time of the region.

For example, time at which a beam or a cell actually starts to cover a region may be understood as that time at which a coverage/service region of the beam or the cell overlaps the region. Time at which a beam or a cell actually ends coverage of a region may be understood as that time at which the coverage/service region of the beam or cell does not overlap the region. A full coverage region of the beam or the cell may be understood as that the region is completely located in a coverage/service region of the beam or the cell. In other words, the region is a subset of the coverage/service region of the beam or the cell.

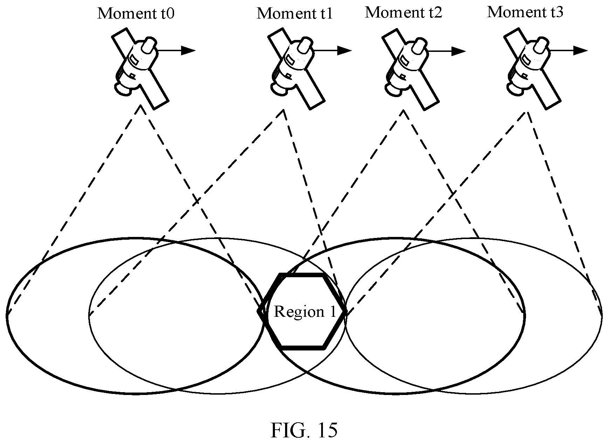

For example, as shown in FIG. 15, it is assumed that a coverage region of a beam starts to overlap a region 1 at a moment t0, and time at which the beam actually starts to cover the region 1 is t0. At a moment t1, the beam starts to fully cover the region 1, and start time at which the beam fully covers the region 1 is t1. Between t0 and t1, the coverage region of the beam overlaps the region 1, but the coverage region of the beam does not completely include the region 1. At a moment t2, the beam starts to no longer fully cover the region 1, and time at which the beam ends full coverage of the region 1 is t2. At a moment t3, the coverage region of the beam starts to no longer overlap the region 1, and time at which the beam actually ends coverage of the region 1 is t3. Between t2 and t3, the coverage region of the beam overlaps the region 1, but the coverage region of the beam does not completely include the region 1, or the beam does not fully cover the region 1.

In a possible implementation, the first information may include an index of the first beam, an index of at least one region served by the first beam, and time information of the at least one region served by the first beam. The time information is at least one of the coverage start time, the coverage end time, or the remaining coverage time. Alternatively, the first information may include an index of each beam in the first cell, an index of at least one region served by each beam, and time information of the at least one region served by each beam. For example, the beam is an SSB beam. The first information may indicate a relationship shown in the following Table 2.1.

**Table 2.1**

| SSB index | Region index | Time information |
|---|---|---|
| 0 | 101 | t101 |
| 0 | 102 | t102 |
| 1 | 103 | t103 |
| 1 | 104 | t104 |
| ... | ... | ... |

It can be learned from Table 2 that at least one region served by an SSB 0 is a region 101 and a region 102. At least one region served by an SSB 1 is a region 103 and a region 104. Time information of the region 101 is t101, and t101 may be at least one of coverage start time, coverage end time, or remaining coverage time of the region 101. t102 is time information of the region 102, t103 is time information of the region 103, and t104 is time information of the region 104.

Optionally, in the earth-fixed mode, time information of a plurality of regions may be the same. In this case, the network device may send one piece of time information to the plurality of regions, that is, the plurality of regions share one piece of time information. For example, the beam is an SSB. It is assumed that time information (represented as t1) of the region 103 is the same as that of the region 104, and the first information may indicate a relationship shown in Table 2.2.

**Table 2.2**

| SSB index | Region index | Time information |
|---|---|---|
| 0 | 101 | t101 |
| 0 | 102 | t102 |
| 1 | 103 | t1 |
| 1 | 104 | |
| ... | ... | ... |

In another possible implementation, the first information may include N region index sets and N time information sets, and the N region index sets are in a one-to-one correspondence with the N time information sets. An n^{th} region index set includes an index of at least one region served by an n^{th} beam of the first cell, and an n^{th} time information set includes time information of the at least one region served by the n^{th} beam of the first cell. N is a quantity of beams in the first cell, and *n* = 0, 1, ... , *N* - 1. In this case, the first information may not include the index of the first beam or the index of each beam in the first cell.

For example, the beam is an SSB. The first information may include the following region index sets {101, 102}, {103, 104}, ..., and the following time information sets {t101, t102}, {t103, t104}, ..., that are in a one-to-one correspondence with the region index sets. It indicates that the at least one region served by the SSB 0 is the region 101 and the region 102, and time information of the region 101 and the region 102 is t101 and t102 respectively. The at least one region served by the SSB 1 is the region 103 and the region 104, and time information of the region 103 and the region 104 is respectively t103 and t104. The rest can be deduced by analogy.

When the first information includes at least one of the coverage start time, the coverage end time, or the remaining coverage time of the at least one region served by the first beam or the first cell, as shown in FIG. 14, that the terminal device performs measurement control based on the location information of the terminal device and the first information may include: The terminal device determines a first moment based on at least one of coverage start time, coverage end time, or remaining coverage time of a first region, and starts neighboring cell measurement before the first moment.

The first region is a region, in the at least one region served by the first beam or the first cell, in which the terminal device is located. For example, the terminal device may determine, based on the location information of the terminal device, a region in which the terminal device is located, and determine the region as the first region when the region in which the terminal device is located is within the service region of the first beam or the first cell in time domain.

The first moment is a moment at which the first beam or the first cell stops serving the first region. Alternatively, the first moment may be understood as service end time of the first region.

In a possible implementation, duration between the first moment and the current moment is first remaining coverage time of the first region. The first remaining coverage time of the first region may be the remaining coverage time of the first region carried in the first information, or may be the remaining coverage time determined based on the coverage start time and/or the coverage end time of the first region carried in the first information.

In another possible implementation, duration between the first moment and the current moment is second remaining coverage time of the first region. The second remaining coverage time of the first region is a difference between the first remaining coverage time of the first region and first duration, the first duration is duration between the current moment and a second moment, and the second moment may be a moment at which the terminal device receives the first information, that is, a receiving moment of the first information.

In a possible implementation, when receiving the first information, where the first information includes at least one of the coverage start time, the coverage end time, or the remaining coverage time of the at least one region served by the first beam or the first cell, the terminal device performs measurement control according to the method described in the second possible implementation. If the terminal device does not receive the first information, the terminal device may perform measurement according to a definition in the existing protocol.

In the foregoing second possible implementation, the network device sends at least one of the coverage start time, the coverage end time, or the remaining coverage time of the at least one region served by the beam or the cell, so that terminal devices located in different regions can start measurement before the beam or the cell ends serving the region in which the terminal device is located, that is, terminal devices in different regions served by a same beam or cell may start measurement at different time. In comparison with determining, based on cell-level remaining coverage time, whether to start measurement, this solution can improve flexibility of starting measurement by the terminal device, and prevent the terminal device in a region with long remaining coverage time from starting measurement too early, that is, reduce unnecessary measurement of the terminal device, and reduce power consumption of the terminal device.

In a third possible implementation, the information about the region includes neighboring cell information associated with the region. In other words, the first information includes neighboring cell information associated with the at least one region served by the first beam or the first cell.

In a possible implementation, neighboring cell information associated with a region indicates at least one cell. The cell indicated by the neighboring cell information may be a neighboring cell of a current cell. A service region of a cell indicated by neighboring cell information associated with a region may overlap the region.

For example, the neighboring cell information may include an identifier of a cell, for example, a physical cell identifier (physical cell identifier, PCI) or a cell global identifier (cell global identity, CGI).

In a possible implementation, cells indicated by neighboring cell information associated with different regions served by the first beam or the first cell may be different, may be the same, or may be partially the same. This is not specifically limited in this application.

In a possible implementation, the first information may include the index of the first beam, an index of at least one region served by the first beam, and neighboring cell information associated with the at least one region served by the first beam. Alternatively, the first information may include an index of each beam in the first cell, an index of at least one region served by each beam, and neighboring cell information associated with the at least one region served by each beam. For example, the beam is an SSB beam. The first information may indicate a relationship shown in the following Table 3.

**Table 3**

| SSB index | Region index | Associated neighboring cell information |
|---|---|---|
| 0 | 101 | Neighboring cell information #1 |
| 0 | 102 | Neighboring cell information #2 |
| 1 | 103 | Neighboring cell information #3 |
| 1 | 104 | Neighboring cell information #4 |
| ... | ... | ... |

It can be learned from Table 3 that at least one region served by an SSB 0 is a region 101 and a region 102. At least one region served by an SSB 1 is a region 103 and a region 104. Neighboring cell information associated with the region 101 is neighboring cell information #1, and at least one cell indicated by the neighboring cell information #1 is a neighboring cell associated with the region 101.

In another possible implementation, the first information may include N region index sets and N neighboring cell information sets, and the N region index sets are in a one-to-one correspondence with the N neighboring cell information sets. An n^{th} region index set includes an index of at least one region served by an n^{th} beam of the first cell, and an n^{th} neighboring cell information set includes neighboring cell information associated with the at least one region served by the n^{th} beam of the first cell. N is a quantity of beams in the first cell, and *n* = 0, 1, ... , *N* - 1. In this case, the first information may not include the index of the first beam or the index of each beam in the first cell.

For example, the beam is an SSB. The first information may include the following region index sets {101, 102}, {103, 104}, ..., and the following neighboring cell information sets {neighboring cell information #1, neighboring cell information #2}, {neighboring cell information #3, neighboring cell information #4}, ..., that are in a one-to-one correspondence with the region index sets. It indicates that the at least one region served by the SSB 0 is the region 101 and the region 102, and neighboring cell information associated with the region 101 and the region 102 is the neighboring cell information #1 and the neighboring cell information #2 respectively. The at least one region served by the SSB 1 is the region 103 and the region 104, and neighboring cell information associated with the region 103 and the region 104 is the neighboring cell information #3 and the neighboring cell information #4 respectively. The rest can be deduced by analogy.

When the first information includes the neighboring cell information associated with the at least one region served by the first beam or the first cell, that the terminal device performs measurement control based on the location information of the terminal device and the first information may include: The terminal device performs measurement based on the neighboring cell information associated with the first region. The first region is a region, in the at least one region served by the first beam or the first cell, in which the terminal device is located. For details, refer to the foregoing related descriptions of the first region. Details are not described herein again.

For example, that the terminal device performs measurement based on the neighboring cell information associated with the first region may include: The terminal device measures a neighboring cell indicated by the neighboring cell information associated with the first region.

In some implementation scenarios, the first information may indicate both time information of the at least one region served by the first beam or the first cell and the neighboring cell information associated with the at least one region served by the first beam or the first cell. In other words, the first information may indicate a relationship shown in the following Table 4.

**Table 4**

| SSB index | Region index | Time information | Associated neighboring cell information |
|---|---|---|---|
| 0 | 101 | t101 | Neighboring cell information #1 |
| 0 | 102 | t102 | Neighboring cell information #2 |
| 1 | 103 | t103 | Neighboring cell information #3 |
| 1 | 104 | t104 | Neighboring cell information #4 |
| ... | ... | ... | ... |

In this scenario, that the terminal device performs measurement control based on the location information of the terminal device and the first information may include: The terminal device determines the first moment based on at least one of the coverage start time, the coverage end time, or the remaining coverage time of the first region, and performs neighboring cell measurement based on the neighboring cell information associated with the first region before the first moment. For the first region, the first moment, performing neighboring cell measurement based on the neighboring cell information associated with the first region, and the like, refer to the foregoing related descriptions. Details are not described herein again.

In a possible implementation, when receiving the first information, where the first information includes the neighboring cell information associated with the at least one region served by the first beam or the first cell, the terminal device performs measurement control according to the method described in the third possible implementation. If the terminal device does not receive the first information, the terminal device may perform measurement according to a definition in the existing protocol.

Based on the foregoing third possible implementation, the network device sends the neighboring cell information associated with the at least one region served by the beam or the cell, so that terminal devices located in different regions can perform measurement based on the neighboring cell information associated with the regions in which the terminal devices are located, that is, cells measured by terminal devices in different regions served by a same beam or cell may be different. This improves measurement flexibility of the terminal device. In comparison with a solution in which each terminal device measures a same neighboring cell, this solution reduces unnecessary neighboring cell measurement, thereby reducing power consumption of the terminal device.

In a fourth possible implementation, information about a region includes first indication information and/or second indication information. In other words, the first information includes the first indication information and/or the second indication information corresponding to the at least one region served by the first beam or the first cell.

The first indication information indicates whether measurement configuration is allowed to be changed. The first indication information may be at a granularity of region. Therefore, it may also be considered that first indication information corresponding to a region indicates whether a terminal device located in the region is allowed to change measurement configuration.

For example, changing the measurement configuration may include changing (for example, increasing or decreasing) a measurement period, changing a quantity of measurement objects, and the like. When changing the measurement configuration includes increasing the measurement period and/or decreasing the quantity of measurement objects, the first indication information indicates whether the measurement configuration is allowed to be changed. It may also be understood that the first indication information indicates whether relaxed measurement is allowed to be started. Relaxed measurement is used to reduce measurement, to reduce power consumption of the terminal device. For example, relaxed measurement may include increasing the measurement period and/or reducing the quantity of measurement objects.

For example, when changing the measurement configuration includes increasing the measurement period, a measurement period of the current cell may be increased, and/or a measurement period of the neighboring cell of the current cell may be increased. When changing the measurement configuration includes reducing the quantity of measurement objects, a quantity of neighboring cells to be measured may be reduced.

The second indication information indicates a first threshold, and the first threshold is a time threshold used to determine whether to change the measurement configuration. The second indication information may be at a granularity of region. Therefore, it may also be considered that second indication information corresponding to a region indicates a first threshold corresponding to the region. The first threshold corresponding to the region may be used by the terminal device in the region to determine whether to change the measurement configuration.

For example, when changing the measurement configuration includes increasing the measurement period and/or decreasing the quantity of measurement objects, the first threshold may be understood as a time threshold used to determine whether to start relaxed measurement.

In a possible implementation, first indication information corresponding to different regions served by the first beam or the first cell may be the same or may be different. For example, the region served by the first beam includes a region 1 and a region 2. First indication information corresponding to the region 1 may indicate that the measurement configuration is allowed to be changed, and first indication information corresponding to the region 2 may indicate that the measurement configuration is not allowed to be changed. When all regions served by the first beam or the first cell correspond to same first indication information, the first information may include one piece of first indication information.

Second indication information corresponding to different regions served by the first beam or the first cell may be the same or may be different. For example, the region served by the first beam includes a region 1 and a region 2. The region 1 and the region 2 may correspond to same second indication information, that is, correspond to a same first threshold. Alternatively, the region 1 and the region 2 may correspond to different second indication information, second indication information corresponding to the region 1 indicates a first threshold 1, and second indication information corresponding to the region 2 indicates a first threshold 2. When all regions served by the first beam or the first cell correspond to same second indication information, the first information may include one piece of second indication information.

In a possible implementation, when the information about the region includes the second indication information, because the second indication information indicates the time threshold used to determine whether to change the measurement configuration, the measurement configuration may be allowed to be changed by default.

In another possible implementation, when the information about the region includes the first indication information, and the first indication information does not allow the measurement configuration to be changed, the information about the region may not include the second indication information. Certainly, the information about the region may alternatively include the second indication information. This is not specifically limited in this application.

In a possible implementation, the first information may include the index of the first beam, the index of the at least one region served by the first beam, and first indication information and/or second indication information corresponding to the at least one region served by the first beam. Alternatively, the first information may include an index of each beam in the first cell, an index of at least one region served by each beam, and first indication information and/or second indication information corresponding to each beam. For example, the beam is an SSB beam, and the information about the region includes the first indication information and the second indication information. The first information may indicate a relationship shown in Table 5 or Table 6.

**Table 5**

| SSB index | Region index | First indication information | Second indication information |
|---|---|---|---|
| 0 | 101 | First indication information #1 | First threshold #1 |
| 0 | 102 | First indication information #2 | First threshold #2 |
| 1 | 103 | First indication information #3 | First threshold #3 |
| 1 | 104 | First indication information #4 | First threshold #4 |
| ... | ... | ... | ... |

**Table 6**

| SSB index | Region index | First indication information | Second indication information |
|---|---|---|---|
| 0 | 101 | | |
| 0 | 102 | | |
| 1 | 103 | First indication information #5 | First threshold #5 |
| 1 | 104 | | |
| ... | ... | | |

In the relationship shown in Table 5, different regions in the at least one region served by the first beam or the first cell may correspond to different first indication information and different first thresholds. In the relationship shown in Table 6, regions served by the first beam or the first cell corresponds to same first indication information and same second indication information.

In another possible implementation, the first information may include N region index sets and N indication information sets, and the N region index sets are in a one-to-one correspondence with the N indication information sets. An n^{th} region index set includes an index of at least one region served by an n^{th} beam of the first cell, and an n^{th} indication information set includes first indication information and second indication information that correspond to the at least one region served by the n^{th} beam of the first cell. N is a quantity of beams in the first cell, and *n* = 0, 1, ... , *N* - 1. In this case, the first information may not include the index of the first beam or the index of each beam in the first cell.

For example, the beam is an SSB. The first information may include the following region index sets {101, 102}, {103, 104}, ..., and the following indication information sets {first indication information #1, first threshold #1; first indication information #2, first threshold #2}, {first indication information #3, first threshold #3; first indication information #4, first threshold #4}, ..., that are in a one-to-one correspondence with the region index sets. It indicates that the at least one region served by an SSB 0 is a region 101 and a region 102. The region 101 corresponds to the first indication information #1 and/or the first threshold #1, and the region 102 corresponds to the first indication information #2 and/or the first threshold #2. The rest can be deduced by analogy.

In a first possible implementation, when the first information includes the first indication information corresponding to the at least one region served by the first beam or the first cell, that the terminal device performs measurement control based on the location information of the terminal device and the first information may include: When first indication information corresponding to the first region indicates that the measurement configuration is allowed to be changed in the first region, the terminal device changes the measurement configuration, for example, the terminal device starts relaxed measurement. The first region is a region, in the at least one region served by the first beam or the first cell, in which the terminal device is located. For details, refer to the foregoing related descriptions. Details are not described herein again.

In a second possible implementation, when the first information includes the second indication information corresponding to the at least one region served by the first beam or the first cell, that the terminal device performs measurement control based on the location information of the terminal device and the first information may include: When the remaining coverage time of the first region is greater than a first threshold indicated by second indication information corresponding to the first region, the terminal device changes the measurement configuration. For the first region, refer to the foregoing related descriptions. Details are not described herein again.

For example, the remaining coverage time of the first region may be the remaining coverage time indicated by the network device in the second possible implementation. Alternatively, after the network device indicates the remaining coverage time of the first region in the second possible implementation, the terminal device may determine the remaining coverage time based on the remaining coverage time indicated by the network device and the current moment. For details, refer to related descriptions of the second remaining coverage time of the first region in the second possible implementation. Details are not described herein again.

In a third possible implementation, when the first information includes the first indication information and the second indication information that correspond to the at least one region served by the first beam or the first cell, that the terminal device performs measurement control based on the location information of the terminal device and the first information may include: The first indication information indicates that the measurement configuration is allowed to be changed in the first region, and the remaining coverage time of the first region is greater than the first threshold indicated by the second indication information. The first indication information may be the first indication information corresponding to the first region, and the second indication information may be the second indication information corresponding to the first region. For the first region, refer to the foregoing related descriptions. For the remaining coverage time of the first region, refer to the related descriptions in the second possible implementation. Details are not described herein again.

Optionally, when the first indication information does not allow the measurement configuration to be changed in the first region, or the remaining coverage time of the first region is less than or equal to the first threshold indicated by the second indication information, the terminal device may not change the measurement configuration.

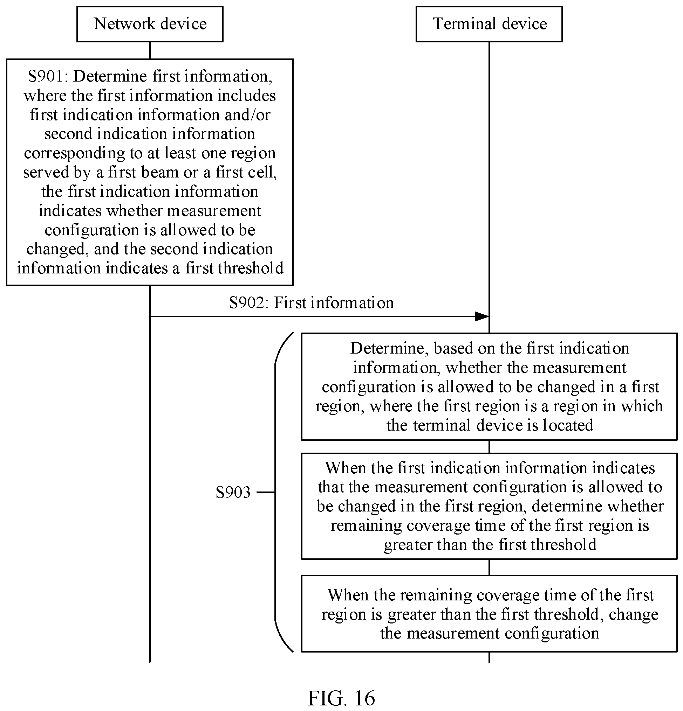

Optionally, in a third possible implementation, as shown in FIG. 16, after receiving the first information, the terminal device may determine, based on the first indication information, whether the measurement configuration is allowed to be changed in the first region. When the measurement configuration is allowed to be changed in the first region, it is determined whether the remaining coverage time of the first region is greater than the first threshold indicated by the second indication information. When the remaining coverage time of the first region is greater than the first threshold indicated by the second indication information, the measurement configuration is changed.

Optionally, in the foregoing second and third possible implementations, it may be considered that the network device may send the time information of the at least one region served by the first beam or the first cell, and may also send the first indication information and/or the second indication information corresponding to the at least one region. For example, the beam is an SSB beam, and the information about the region includes the first indication information and the second indication information. The network device may indicate a relationship shown in the following Table 7.

**Table 7**

| SSB index | Region index | Time information | First indication information | Second indication information |
|---|---|---|---|---|
| 0 | 101 | t101 | First indication information #1 | First threshold #1 |
| 0 | 102 | t102 | First indication information #2 | First threshold #2 |
| 1 | 103 | t103 | First indication information #3 | First threshold #3 |
| 1 | 104 | t104 | First indication information #4 | First threshold #4 |
| ... | ... | ... | ... | ... |

In a possible implementation, after receiving the first information and changing the measurement configuration for the first time based on the first information, the terminal device may dynamically determine whether the current remaining coverage time of the first region is greater than the first threshold indicated by the second indication information. If the current remaining coverage time is greater than the first threshold, changed measurement configuration continues to be maintained. If the current remaining coverage time is less than or equal to the first threshold, latest measurement configuration before the first information is received is restored, or measurement configuration before the change is restored.

For example, it is assumed that changing the measurement configuration is starting relaxed measurement. If the current remaining coverage time is greater than the first threshold indicated by the second indication information, the terminal device continues to perform relaxed measurement. If the current remaining coverage time is less than or equal to the first threshold, the terminal device disables relaxed measurement.

In a possible implementation, when receiving the first information, where the first information includes the first indication information and/or the second indication information corresponding to the at least one region served by the first beam or the first cell, the terminal device performs measurement control according to the method described in the fourth possible implementation. If the terminal device does not receive the first information, the terminal device may perform measurement according to a definition in the existing protocol.

Based on the foregoing fourth possible implementation, the network device may indicate whether the measurement configuration is allowed to be changed and/or indicate the first threshold used to determine whether the measurement configuration is allowed to be changed. When the network device indicates that the measurement configuration is allowed to be changed and/or the remaining coverage time of the region is greater than the first threshold, the terminal device in the region may change the measurement configuration, to improve measurement flexibility. In addition, when changing the measurement configuration is starting relaxed measurement, measurement frequency of the terminal device can be reduced, thereby reducing power consumption of the terminal device. If the terminal device starts relaxed measurement when the remaining coverage time of the region is greater than the first threshold, because the remaining coverage time of the region is long, starting relaxed measurement does not affect the terminal device.

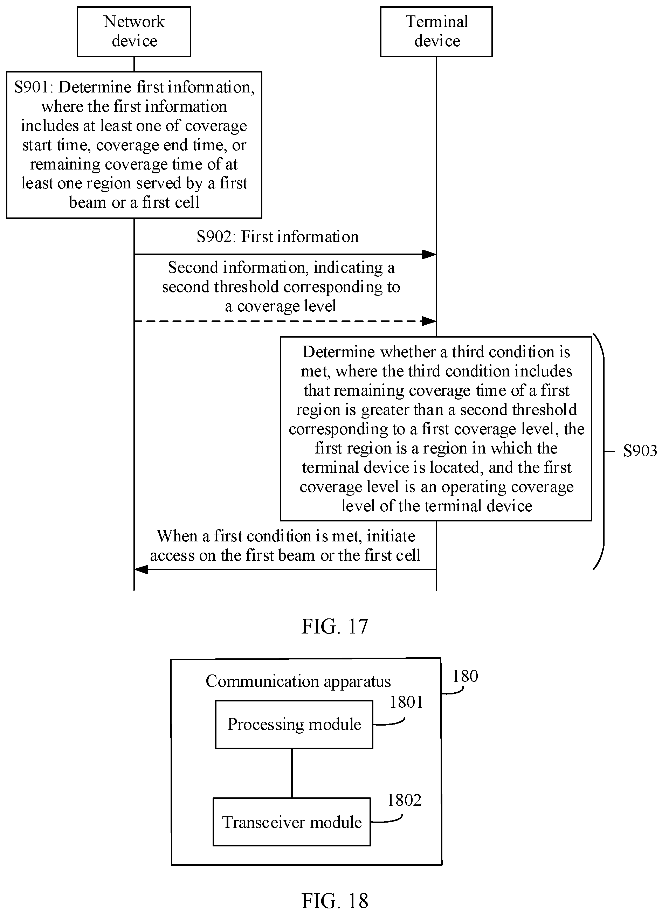

In a fifth possible implementation, as shown in FIG. 17, the network device further sends second information to the terminal device. Correspondingly, the terminal device receives the second information from the network device. The second information indicates a second threshold corresponding to at least one coverage level. A second threshold corresponding to a coverage level is minimum time required for completing transmission at the coverage level. For example, the "transmission" may be one data or signaling transmission between the terminal device and the network device.

In a possible implementation, the coverage level may be used to reflect or indicate signal quality. In other words, the coverage level is related to signal quality. The terminal device may obtain downlink signal quality through downlink measurement, and determine an operating coverage level of the terminal device based on the downlink signal quality and a signal quality threshold/range. The operating coverage level of the terminal device may also be referred to as a coverage level corresponding to the terminal device. The coverage level may also be referred to as a coverage strength level.

In a possible implementation, a smaller value of the coverage level indicates better signal quality corresponding to the coverage level. For example, the coverage level may be classified into a coverage level 0, a coverage level 1, and a coverage level 2. Downlink signal quality corresponding to the coverage level 0, the coverage level 1, and the coverage level 2 decreases in sequence. For example, signal quality corresponding to the coverage level 0, the coverage level 1, and the coverage level 2 may be shown in Table 8.

**Table 8**

| Coverage level | Signal quality |
|---|---|
| 0 | Rx>First value |
| 1 | Second value<Rx<=First value |
| 2 | Rx <=Second value |

Rx represents signal quality. The first value and the second value may be understood as signal quality thresholds, and (second value, first value] may be understood as a signal quality range. Signal quality represented by the first value is greater than/higher than/stronger than signal quality represented by the second value.

In a possible implementation, better signal quality corresponding to a coverage level indicates shorter minimum time required for completing transmission at the coverage level, that is, a smaller second threshold corresponding to the coverage level. For example, based on the example shown in Table 8, a second threshold corresponding to each coverage level may be shown in Table 9.

**Table 9**

| Coverage level | Second threshold (minimum time required to complete transmission at a coverage level) |
|---|---|
| 0 | 4 seconds (second, s) |
| 1 | 6s |
| 2 | 8s |

In a possible implementation, the second information may be included in the first information, that is, the first information includes the second information. Alternatively, the second information may be decoupled from the first information, that is, the second information may be information that exists independent of the first information. In this case, the second information and the first information may be carried in a same message, or may be carried in different messages. This is not specifically limited in this application.

When the first information includes at least one of the coverage start time, the coverage end time, or the remaining coverage time of the at least one region served by the first beam or the first cell, and the terminal device receives the second information, as shown in FIG. 17, that the terminal device performs access control based on the location information of the terminal device and the first information includes:

When a third condition is met, the terminal device initiates access on the first beam or the first cell; or when the third condition is not met, the terminal device determines not to initiate access on the first beam or the first cell. In other words, the terminal device may determine whether the third condition is met, and initiate access on the first beam or the first cell when the third condition is met.

The third condition includes: The remaining coverage time of the first region is greater than a second threshold corresponding to a first coverage level. The first region is a region, in the at least one region served by the first beam or the first cell, in which the terminal device is located. For details, refer to the foregoing related descriptions of the first region. The remaining coverage time of the first region may be the first remaining coverage time of the first region, or may be the second remaining coverage time of the first region. For details, refer to related descriptions in the second possible implementation. The first coverage level is the operating coverage level of the terminal device. For details, refer to the foregoing related descriptions of the operating coverage level of the terminal device. Details are not described herein again.

Optionally, when the first cell is the current cell, the third condition may further include a condition in an access criterion defined in an existing protocol. When the first cell is a neighboring cell of the current cell, the third condition may further include a condition in a reselection/handover criterion defined in an existing protocol. In this embodiment of this application, an example in which all conditions in an access/reselection/handover criterion defined in the existing protocol are met is used for description.

For example, the operating coverage level of the terminal device is a coverage level 1, and a second threshold corresponding to the coverage level 1 is 6s, that is, minimum time required for completing transmission at the coverage level 1 is 6s. If the remaining coverage time of the first region is 4s, the third condition is not met, the terminal device does not initiate access. If the remaining coverage time of the first region is 10s, the third condition is met, indicating that the remaining coverage time is sufficient to complete one transmission, and the terminal device initiates access.

For that the terminal device initiates access on the first beam or the first cell, refer to related descriptions in the first possible implementation. Details are not described herein again.

In the fifth possible implementation, the terminal device may be a terminal device in an IoT system or a narrowband internet of things (narrow band internet of things, NB-IoT), or the terminal device may be an IoT device. In other words, the fifth possible implementation may be applied to an IoT scenario.

In a possible implementation, when the terminal device receives the first information and the second information, where the first information includes at least one of the coverage start time, the coverage end time, or the remaining coverage time of the at least one region served by the first beam or the first cell, the terminal device performs access control according to the method described in the fifth possible implementation. If the terminal device does not receive the first information, the terminal device may perform access according to a definition in an existing protocol.

In the foregoing fifth possible implementation, the network device indicates minimum time required to complete transmission at the coverage level, so that the terminal device can determine, based on the minimum time required to complete transmission at the operating coverage level of the terminal device and the remaining coverage time of the region in which the terminal device is located, whether to initiate access. When the remaining coverage time of the region in which the terminal device is located is sufficient to complete one transmission, the terminal device initiates access, to improve an access success rate of the terminal device.

In addition, if the terminal device initiates access when the remaining coverage time is insufficient, an access may fail. In other words, the terminal device initiates access, but the access fails. Based on the solution of this application, when the remaining coverage time is insufficient, the terminal device does not initiate access, that is, the terminal device can be prevented from initiating access when the remaining coverage time is insufficient, so that power consumption of the terminal device can be reduced.

It may be understood that, in the foregoing embodiments, the methods and/or the steps implemented by the network device may alternatively be implemented by a part (for example, a processor, a chip, a chip system, a circuit, a logical module, or software) that can be used in the network device, and the methods and/or the steps implemented by the terminal device may alternatively be implemented by a part (for example, a processor, a chip, a chip system, a circuit, a logical module, or software) that can be used in the terminal device. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is executed in a manner of hardware or computer software driving hardware depends on a specific application and a design constraint condition of the technical solution. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 18 of a communication apparatus is a diagram of a structure of a communication apparatus 180. The communication apparatus 180 includes a processing module 1801 and a transceiver module 1802. The communication apparatus 180 may be configured to implement functions of the foregoing network device or the foregoing terminal device.

In some embodiments, the communication apparatus 180 may further include a storage module (not shown in FIG. 18), configured to store program instructions and data.

In some embodiments, the transceiver module 1802 may also be referred to as a transceiver unit, configured to implement a sending function and/or a receiving function. The transceiver module 1802 may include a transceiver circuit, a transceiver machine, a transceiver, or a communication interface.

In some embodiments, the transceiver module 1802 may include a receiving module and a sending module, respectively configured to perform receiving and sending steps performed by the network device or the terminal device in the foregoing method embodiments and/or configured to support another process of the technology described in this specification. The processing module 1801 may be configured to perform processing (for example, determining) steps performed by the network device or the terminal device in the foregoing method embodiments and/or configured to support another process of the technology described in this specification.

When the communication apparatus 180 is configured to implement the functions of the foregoing terminal device,
the transceiver module 1802 is configured to receive first information, where the first information includes information about at least one region served by a first beam or a first cell, a coverage region of the first beam or the first cell includes at least one region, and the region is fixed relative to the earth; and the processing module 1801 is configured to perform at least one of access control, camping control, or measurement control based on location information of the terminal device and the first information.

Optionally, the information about the region includes an index of the region. That the processing module 1801 is configured to perform access control based on the location information of the terminal device and the first information includes: The processing module 1801 is configured to initiate access on the first beam or the first cell when a first condition is met; or determine not to initiate access on the first beam or the first cell when a first condition is not met. That the processing module 1801 is configured to perform camping control based on the location information of the terminal device and the first information includes: The processing module 1801 is configured to: camp on the first cell when a second condition is met; or determine not to camp on the first cell when a second condition is not met. The first condition or the second condition includes: The terminal device is located in the at least one region served by the first beam or the first cell.

Optionally, the information about the region includes at least one of the following: coverage start time, coverage end time, or remaining coverage time. That the processing module 1801 is configured to perform measurement control based on the location information of the terminal device and the first information includes: The processing module 1801 is configured to determine a first moment based on at least one of coverage start time, coverage end time, or remaining coverage time of a first region. The processing module 1801 is further configured to start neighboring cell measurement before the first moment. The first moment is a moment at which the first beam or the first cell stops serving the first region, and the first region is a region, in the at least one region served by the first beam or the first cell, in which the terminal device is located.

Optionally, information about a region includes neighboring cell information associated with the region. That the processing module 1801 is configured to perform measurement control based on the location information of the terminal device and the first information includes: The processing module 1801 is configured to perform neighboring cell measurement based on neighboring cell information associated with the first region, where the first region is a region, in the at least one region served by the first beam or the first cell, in which the terminal device is located.

Optionally, the information about the region includes first indication information and/or second indication information. The first indication information indicates whether measurement configuration is allowed to be changed. The second indication information indicates a first threshold, and the first threshold is a time threshold used to determine whether to change the measurement configuration. That the processing module 1801 is configured to perform measurement control based on the location information of the terminal device and the first information includes: The processing module 1801 is configured to change the measurement configuration when remaining coverage time of the first region is greater than the first threshold. Alternatively, the processing module 1801 is configured to: when the first indication information indicates that the measurement configuration is allowed to be changed in the first region, and the remaining coverage time of the first region is greater than the first threshold, change the measurement configuration. The first region is a region, in the at least one region served by the first beam or the first cell, in which the terminal device is located.

Optionally, the transceiver module 1802 is further configured to receive second information, where the second information indicates a second threshold corresponding to at least one coverage level, and a second threshold corresponding to a coverage level is minimum time required to complete transmission at the coverage level.

Optionally, that the processing module 1801 is configured to perform access control based on the location information of the terminal device and the first information includes: The processing module 1801 is configured to: initiate access on the first beam or the first cell when a third condition is met; or determine not to initiate access on the first beam or the first cell when a third condition is not met. The third condition includes: The remaining coverage time of the first region is greater than a second threshold corresponding to a first coverage level, where the first region is a region, in the at least one region served by the first beam or the first cell, in which the terminal device is located, and the first coverage level is an operating coverage level of the terminal device.

When the communication apparatus 180 is configured to implement the functions of the foregoing network device,
the processing module 1801 is configured to determine the first information, and the transceiver module 1802 is configured to send the first information. The first information includes information about the at least one region served by the first beam or the first cell, the coverage region of the first beam or the first cell includes at least one region, and the region is fixed relative to the earth.

All related content of the steps in the foregoing method embodiments may be cited in function descriptions of the corresponding functional modules. Details are not described herein again.

In this application, the communication apparatus 180 may be presented in a form of the functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 180 in FIG. 18 is a chip or a chip system, a function/implementation process of the transceiver module 1802 may be implemented through an input/output interface (or a communication interface) of the chip or the chip system, and a function/implementation process of the processing module 1801 may be implemented through a processor (or a processing circuit) of the chip or the chip system.

Because the communication apparatus 180 provided in this embodiment may perform the foregoing methods, for technical effect that can be obtained by the communication apparatus 180, refer to the foregoing method embodiments. Details are not described herein again.

In a possible product form, the terminal device or the network device in embodiments of this application may be implemented by using one or more field programmable gate arrays (field programmable gate arrays, FPGAs), a programmable logic device (programmable logic device, PLD), a controller, a state machine, a gate logic, a discrete hardware component, any other appropriate circuit, or any combination of circuits that can perform various functions described in this application.

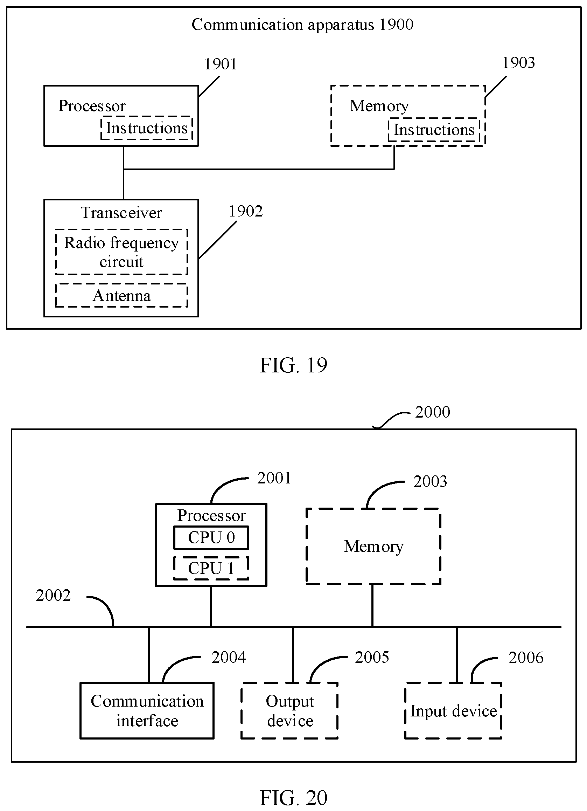

In another possible product form, the terminal device or the network device in embodiments of this application may be implemented by using a general bus architecture. For ease of description, FIG. 19 is a diagram of a structure of a communication apparatus 1900 according to an embodiment of this application. The communication apparatus 1900 includes a processor 1901 and a transceiver 1902. The communication apparatus 1900 may be a network device, or a chip or a chip system in the network device. Alternatively, the communication apparatus 1900 may be a terminal device, or a chip or a module in the terminal device. FIG. 19 shows only main components of the communication apparatus 1900. In addition to the processor 1901 and the transceiver 1902, the communication apparatus may further include a memory 1903 and an input/output apparatus (not shown in the figure).

Optionally, the processor 1901 is mainly configured to: process a communication protocol and communication data, control the entire communication apparatus, execute a software program, and process data of the software program. The memory 1903 is mainly configured to store the software program and the data. The transceiver 1902 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, like a touchscreen, a display, or a keyboard, is mainly configured to: receive data input by a user and output data to the user.

Optionally, the processor 1901, the transceiver 1902, and the memory 1903 may be connected through a communication bus.

After the communication apparatus is powered on, the processor 1901 may read the software program in the memory 1903, interpret and execute instructions of the software program, and process the data of the software program. When data needs to be sent in a wireless manner, the processor 1901 performs baseband processing on to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 1901. The processor 1901 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the foregoing communication apparatus 180 may be in a form of the communication apparatus 1900 shown in FIG. 19.

In an example, a function/implementation process of the processing module 1801 in FIG. 18 may be implemented by the processor 1901 in the communication apparatus 1900 shown in FIG. 19 by invoking computer-executable instructions stored in the memory 1903. Functions/implementation processes of the transceiver module 1802 in FIG. 18 may be implemented by the transceiver 1902 in the communication apparatus 1900 shown in FIG. 19.

In still another possible product form, the network device or the terminal device in this application may use a composition structure shown in FIG. 20, or include components shown in FIG. 20. FIG. 20 is a diagram of composition of a communication apparatus 2000 according to this application. The communication apparatus 2000 may be a terminal device, or a chip or a system-on-a-chip in the terminal device, or may be a network device, or a module, a chip, or a system-on-a-chip in the network device.

As shown in FIG. 20, the communication apparatus 2000 includes at least one processor 2001 and at least one communication interface (where FIG. 20 is described merely by using an example in which one communication interface 2004 and one processor 2001 are included). Optionally, the communication apparatus 2000 may further include a communication bus 2002 and a memory 2003.

The processor 2001 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 2001 may alternatively be another apparatus having a processing function, for example, a circuit, a component, or a software module. This is not limited.

The communication bus 2002 is configured to connect different components in the communication apparatus 2000, so that the different components can communicate with each other. The communication bus 2002 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 20. However, it does not mean that there is only one bus or one type of bus.

The communication interface 2004 is configured to communicate with another device or a communication network. For example, the communication interface 2004 may be a module, a circuit, a transceiver, or any apparatus that can implement communication. Optionally, the communication interface 2004 may alternatively be an input/output interface located in the processor 2001, and is configured to implement signal input and signal output of the processor.

The memory 2003 may be an apparatus having a storage function, and is configured to store instructions and/or data. The instruction may be a computer program.

For example, the memory 2003 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 2003 may exist independently of the processor 2001, or may be integrated with the processor 2001. The memory 2003 may be located inside the communication apparatus 2000, or may be located outside the communication apparatus 2000. This is not limited. The processor 2001 may be configured to execute the instructions stored in the memory 2003, to implement methods provided in the following embodiments of this application.

In an optional implementation, the communication apparatus 2000 may further include an output device 2005 and an input device 2006. The output device 2005 communicates with the processor 2001, and may display information in a plurality of manners. For example, the output device 2005 may be a liquid crystal display (liquid crystal display, LCD), a light emitting diode (light emitting diode, LED) display device, a cathode ray tube (cathode ray tube, CRT) display device, a projector (projector), or the like. The input device 2006 communicates with the processor 2001, and may receive an input of a user in a plurality of manners. For example, the input device 2006 may be a mouse, a keyboard, a touchscreen device, or a sensing device.

In some embodiments, in hardware implementation, a person skilled in the art may figure out that the foregoing communication apparatus 180 shown in FIG. 18 may be in a form of the communication apparatus 2000 shown in FIG. 20.

In an example, a function/implementation process of the processing module 1801 in FIG. 18 may be implemented by the processor 2001 in the communication apparatus 2000 shown in FIG. 20 by invoking computer-executable instructions stored in the memory 2003. Functions/implementation processes of the transceiver module 1802 in FIG. 18 may be implemented by the communication interface 2004 in the communication apparatus 2000 shown in FIG. 20.

It should be noted that the structure shown in FIG. 20 does not constitute a specific limitation on the network device or the terminal device. For example, in some other embodiments of this application, the network device or the terminal device may include more or fewer components than those shown in the figure, or a combination of a part of the components, or splits from a part of the components, or an arrangement of different components. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
receiving first information, wherein the first information comprises information about at least one region served by a first beam or a first cell, a coverage region of the first beam or the first cell comprises the at least one region, and the region is fixed relative to the earth; and
performing at least one of access control, camping control, or measurement control based on location information of a terminal device and the first information.

2. The method according to claim 1, wherein the information about the region comprises an index of the region.

3. The method according to claim 2, wherein performing access control based on the location information of the terminal device and the first information comprises: when a first condition is met, initiating access on the first beam or the first cell; or when a first condition is not met, determining not to initiate access on the first beam or the first cell; and
performing camping control based on the location information of the terminal device and the first information comprises: when a second condition is met, camping on the first cell; or when a second condition is not met, determining not to camp on the first cell, wherein
the first condition or the second condition comprises: the terminal device is located in the at least one region served by the first beam or the first cell.

4. The method according to any one of claims 1 to 3, wherein the information about the region comprises at least one of the following: coverage start time, coverage end time, or remaining coverage time.

5. The method according to claim 4, wherein performing measurement control based on the location information of the terminal device and the first information comprises:
determining a first moment based on at least one of coverage start time, coverage end time, or remaining coverage time of a first region, wherein the first moment is a moment at which the first beam or the first cell stops serving the first region, and the first region is a region, in the at least one region served by the first beam or the first cell, in which the terminal device is located; and
starting neighboring cell measurement before the first moment.

6. The method according to any one of claims 1 to 5, wherein the information about the region comprises neighboring cell information associated with the region.

7. The method according to claim 6, wherein performing measurement control based on the location information of the terminal device and the first information comprises:
performing neighboring cell measurement based on the neighboring cell information associated with the region, wherein the first region is a region, in the at least one region served by the first beam or the first cell, in which the terminal device is located.

8. The method according to any one of claims 1 to 7, wherein the information about the region comprises first indication information and/or second indication information; and
the first indication information indicates whether measurement configuration is allowed to be changed, the second indication information indicates a first threshold, and the first threshold is a time threshold used to determine whether to change the measurement configuration.

9. The method according to claim 8, wherein performing measurement control based on the location information of the terminal device and the first information comprises:
when the remaining coverage time of the first region is greater than the first threshold, changing the measurement configuration; or
when the first indication information indicates that the measurement configuration is allowed to be changed in the first region, and the remaining coverage time of the first region is greater than the first threshold, changing the measurement configuration, wherein
the first region is a region, in the at least one region served by the first beam or the first cell, in which the terminal device is located.

10. The method according to any one of claims 1 to 9, wherein the method further comprises: receiving second information, wherein the second information indicates a second threshold corresponding to at least one coverage level, and a second threshold corresponding to a coverage level is minimum time required to complete transmission at the coverage level.

11. The method according to claim 10, wherein performing access control based on the location information of the terminal device and the first information comprises:
when a third condition is met, initiating access on the first beam or the first cell; or when a third condition is not met, determining not to initiate access on the first beam or the first cell, wherein
the third condition comprises: the remaining coverage time of the first region is greater than a second threshold corresponding to a first coverage level, the first region is a region, in the at least one region served by the first beam or the first cell, in which the terminal device is located, and the first coverage level is an operating coverage level of the terminal device.

12. The method according to any one of claims 1 to 11, wherein the first cell is a neighboring cell of a serving cell, or the first beam is a beam in a neighboring cell of a serving cell.

13. The method according to claim 12, wherein the first information is carried in a radio resource control RRC reconfiguration message.

14. The method according to any one of claims 1 to 11, wherein the first information is carried in broadcast information of the first cell.

15. A communication method, wherein the method comprises:
determining first information, wherein the first information comprises information about at least one region served by a first beam or a first cell, a coverage region of the first beam or the first cell comprises the at least one region, and the region is fixed relative to the earth; and
sending the first information.

16. The method according to claim 15, wherein the information about the region comprises an index of the region.

17. The method according to claim 15 or 16, wherein the information about the region comprises at least one of the following: coverage start time, coverage end time, or remaining coverage time.

18. The method according to any one of claims 15 to 17, wherein the information about the region comprises neighboring cell information associated with the region.

19. The method according to any one of claims 15 to 18, wherein the information about the region comprises first indication information and/or second indication information; and
the first indication information indicates whether measurement configuration is allowed to be changed, the second indication information indicates a first threshold, and the first threshold is a time threshold used to determine whether to change the measurement configuration.

20. The method according to any one of claims 15 to 19, wherein the method further comprises: sending second information, wherein the second information indicates a second threshold corresponding to at least one coverage level, and a second threshold corresponding to a coverage level is minimum time required to complete transmission at the coverage level.

21. The method according to any one of claims 15 to 20, wherein the first cell is a neighboring cell of a serving cell, or the first beam is a beam in a neighboring cell of a serving cell.

22. The method according to claim 21, wherein the first information is carried in a radio resource control RRC reconfiguration message.

23. The method according to any one of claims 15 to 20, wherein the first information is carried in broadcast information of the first cell.

24. A computer-readable storage medium, wherein the computer-readable storage medium stores computer instructions or a program, and when the computer instructions or the program is run on a computer, the method according to any one of claims 1 to 14 is performed, or the method according to any one of claims 15 to 23 is performed.

25. A computer program product, wherein the computer program product comprises computer instructions; and when a part or all of the computer instructions are run on a computer, the method according to any one of claims 1 to 14 is performed, or the method according to any one of claims 15 to 23 is performed.

26. A chip, comprising:
a memory, configured to store computer program instructions; and
a processor, configured to execute the computer program instructions, so that a communication apparatus comprising the chip performs the method according to any one of claims 1 to 23.
